(19) Europäisches Patentamt / European Patent Office / Office européen des brevets

(11) **EP 4 571 361 A1**

(12) **EUROPEAN PATENT APPLICATION**
published in accordance with Art. 153(4) EPC

(43) Date of publication:
**18.06.2025 Bulletin 2025/25**

(21) Application number: **22955362.3**

(22) Date of filing: **18.08.2022**

(51) International Patent Classification (IPC):
**G01S 17/02** $^{(2020.01)}$ **G01S 7/481** $^{(2006.01)}$

(52) Cooperative Patent Classification (CPC):
**G01S 7/481; G01S 17/02**

(86) International application number:
**PCT/CN2022/113441**

(87) International publication number:
**WO 2024/036582 (22.02.2024 Gazette 2024/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Yinwang Intelligent Technologies Co., Ltd.**
**Shenzhen, Guangdong 518129 (CN)**

(72) Inventors:
• HUA, Kangjian
  Shenzhen, Guangdong 518129 (CN)
• LIU, Jun
  Shenzhen, Guangdong 518129 (CN)

(74) Representative: **Thun, Clemens**
**Mitscherlich PartmbB**
**Patent- und Rechtsanwälte**
**Karlstraße 7**
**80333 München (DE)**

(54) **TRANSMITTING MODULE, RECEIVING MODULE, DETECTION APPARATUS, AND TERMINAL DEVICE**

(57) A transmitting module, a receiving module, a detection apparatus, and a terminal device are provided. The transmitting module may be applied to a lidar, and may be applied to the fields of autonomous driving, intelligent driving, assisted driving, surveying and mapping, or the like. The transmitting module includes a light source assembly and M light splitters, where M is an integer greater than 1. The light source assembly is configured to transmit a first light beam. A first light splitter in the M light splitters is configured to split the first light beam into $N_1$ second light beams. A field of view range of the $N_1$ second light beams is $[0, \alpha]$, where $N_1$ is an integer greater than 2. A second light splitter in the M light splitters is configured to split a target second light beam in the $N_1$ second light beams into $N_2$ third light beams. The target second light beam is a second light beam in a field of view range $[0, \beta_1]$ or $[\beta_2, \alpha]$, where $\beta_2$ is less than $\alpha$, and $\beta_1$ is greater than 0 and less than $\beta_2$. Intensities and/or angle spacings of second light beams and third light beams that are obtained by using the M light splitters may be not even, so that light beam utilization can be improved.

FIG. 2

**Description**

**TECHNICAL FIELD**

This application relates to the field of optical technologies, and in particular, to a transmitting module, a receiving module, a detection apparatus, and a terminal device.

**BACKGROUND**

With development of science and technology, intelligent terminals such as intelligent transportation equipment, intelligent home devices, robots, and vehicles are gradually entering people's daily life. A lidar can sense a surrounding environment, and then based on sensed environment information, identify and track a moving target, identify a static target like a lane line and a sign plate, and perform route planning by using a navigator, map data, and the like. Therefore, the lidar plays an increasingly important role in the intelligent terminal.

Based on different application requirements of the lidar, there are different requirements for a light beam transmitted by the lidar. Usually, there is a high requirement on a central field of view of the lidar and a low requirement on an edge field of view of the lidar. For example, the central field of view requires detection at a long distance and/or requires a high spatial resolution. However, currently, a light beam transmitted by a mainstream lidar evenly illuminates a detection region. This causes a waste of energy of the light beam transmitted by the lidar.

**SUMMARY**

This application provides a transmitting module, a receiving module, a detection apparatus, and a terminal device, to improve energy utilization of a light beam.

According to a first aspect, this application provides a transmitting module, including a light source assembly and M light splitters, where M is an integer greater than 1; the light source assembly is configured to transmit a first light beam; a first light splitter in the M light splitters is configured to split the first light beam into $N_1$ second light beams, where a field of view range of the $N_1$ second light beams is $[0, \alpha]$, and $N_1$ is an integer greater than 2; and a second light splitter in the M light splitters is configured to split a target second light beam in the $N_1$ second light beams into $N_2$ third light beams, where the target second light beam is a second light beam in a field of view range $[0, \beta_1]$, or a second light beam in a field of view range $[\beta_2, \alpha]$, where $\beta_2$ is less than $\alpha$, and $\beta_1$ is greater than 0 and less than $\beta_2$.

Based on the foregoing solution, the second light beam and the third light beam are obtained by using the M light splitters. Because the second light beam is obtained by splitting the first light beam by the first light splitter, and the third light beam is obtained by splitting the target second light beam by the second light splitter, intensities (or referred to as energy or power) of the second light beam and the third light beam may not be even, so that energy distribution of the light beam transmitted by the transmitting module can be adjusted, thereby improving energy utilization of the first light beam transmitted by the light source assembly. For example, a shape of a light spot formed by the third light beam and a second light beam other than the target second light beam in the $N_1$ second light beams may be a "convex" shape or a "quasi-convex" shape. An intensity of a convex part in a light spot of the "convex" shape or the "quasi-convex" shape is higher than an intensity of a non-convex part, and or a detection distance of the convex part is longer than a detection distance of the non-convex part. It should be understood that the light spot of the "convex" shape or the "quasi-convex" shape provided above is merely an example. A shape of the light spot in this application may alternatively be any other possible shape, and may be specifically adjusted based on a location of a region of interest. This is not limited herein.

In a possible implementation, an intensity of the second light beam is higher than an intensity of the third light beam; and/or an angle spacing between any two adjacent second light beams in the $N_1$ second light beams is less than an angle spacing between any two adjacent third light beams in the $N_2$ third light beams.

The angle spacing between any two adjacent second light beams in the $N_1$ second light beams is less than the angle spacing between any two adjacent third light beams in the $N_2$ third light beams, so that in the $N_1$ second light beams transmitted by the transmitting module, second light beams other than the target second light beam are denser, and the $N_2$ third light beams are sparser. The intensity of the second light beam is designed to be higher than the intensity of the third light beam, so that the second light beam other than the target second light beam in the $N_1$ second light beams transmitted by the transmitting module may be irradiated (or referred to as detect) for a longer distance, and the $N_2$ third light beams may be irradiated (or referred to as detect) for a shorter distance.

For example, the intensity of the second light beam is $P/N_1$, the intensity of the third light beam is $P/(N_1 \times N_2)$, and P is an intensity of the first light beam.

In a possible implementation, a second light beam other than the target second light beam in the $N_1$ second light beams corresponds to a region of interest, and the $N_2$ third light beams correspond to a non-region of interest.

Based on this, the second light beam that is other than the target second light beam in the $N_1$ second light beams

and that corresponds to the region of interest has a higher intensity and a smaller angular resolution, and the $N_2$ third light beams corresponding to the non-region of interest have a lower intensity and a larger angular resolution.

Further, optionally, the region of interest includes a region corresponding to a central field of view of the transmitting module, and the non-region of interest includes a region corresponding to an edge field of view of the transmitting module.

In this way, the central field of view of the transmitting module may have a larger angular resolution, and the edge field of view of the transmitting module may have a smaller angular resolution. In addition, an intensity of a second light beam of the center field of view of the transmitting module is greater than an intensity of a third light beam of the edge field of view, thereby helping improve energy utilization of the light beam. Further, by setting the region of interest as the region corresponding to the central field of view of the detection apparatus, the central field of view of the detection apparatus can detect (or illuminate) a longer distance, thereby meeting a requirement of the central field of view of the detection apparatus. The non-region of interest is set as the region corresponding to the edge field of view of the detection apparatus, so that impact on a detection range of the detection apparatus can be reduced as much as possible, thereby ensuring normal application of the detection apparatus and improving utilization of the light beam transmitted by the transmitting module.

In a possible implementation, the transmitting module further includes M-1 first deflecting prisms, and one second light splitter corresponds to one first deflecting prism; and the first deflecting prism is configured to: deflect the target second light beam by a first angle and then propagate the target second light beam to the second light splitter.

The target second light beam is deflected by the first deflecting prism by the first angle, so that crosstalk between the second light beam obtained through splitting by the first light splitter and the third light beam obtained through splitting by the second light splitter is reduced.

In a possible implementation, an angle spacing between a second light beam and a third light beam that are adjacent and that are on two sides of $\beta_1$ satisfies Formula 1.

$$\Delta\theta_1 - \theta_2(N_2-1)/2 \quad \text{Formula 1}$$

$\Delta\theta_1$ is the first angle, and $\theta_2$ is an angle spacing of the $N_2$ third light beams.

The angle spacing between the second light beam and the third light beam that are adjacent and that are on the two sides of $\beta_1$ is set to satisfy Formula 1, so that crosstalk between the second light beam and the third light beam is further reduced.

In a possible implementation, the light splitter includes a diffractive optical element (diffractive optical element, DOE).

As a light splitter, the DOE has high diffraction efficiency, unique dispersion performance, more design freedom, and wide material selection.

In a possible implementation, the M light splitters further include a third light splitter; and the third light splitter is configured to split a target third light beam in the $N_2$ third light beams into $N_3$ fourth light beams, where a field of view range of the $N_2$ third light beams is $[0, \gamma]$; the target third light beam is a third light beam in a field of view range $[0, \beta_3]$, or a third light beam in a field of view range $[\beta_4, \gamma]$, where $\beta_3$ is greater than 0 and less than $\beta_4$, and $\beta_4$ is less than $\gamma$; and the third light splitter is at least one light splitter after the second light splitter.

The second light beam, the third light beam, and the fourth light beam are obtained by using the first light splitter, the second light splitter, and the third light splitter. Because the second light beam is obtained by splitting the first light beam by the first light splitter, the third light beam is obtained by splitting the target second light beam by the second light splitter, and the fourth light beam is obtained by splitting the target third light beam by the third light splitter, intensities of the second light beam, the third light beam, and the fourth light beam may not be even, and/or angle spacings of the second light beam, the third light beam, and the fourth light beam may not be even.

In a possible implementation, the light source assembly includes a spot light source.

According to a second aspect, this application provides a transmitting module, including a light source assembly, an optical fiber light splitting assembly, and an optical fiber splice array, where the optical fiber light splitting assembly is connected to the optical fiber splice array through an optical fiber, and the optical fiber light splitting assembly includes at least two stages of cascaded optical fiber light splitters; the light source assembly is configured to transmit a first light beam; and the optical fiber light splitting assembly is configured to: split the first light beam into Q fourth light beams, and emit the Q fourth light beams by using the optical fiber splice array, where Q is an integer greater than 2, and an intensity of a fourth light beam emitted by a first optical fiber splice is different from an intensity of a fourth light beam emitted by a second optical fiber splice in the optical fiber splice array.

Based on the foregoing solution, because the intensity of the fourth light beam emitted by the first optical fiber splice is different from the intensity of the fourth light beam emitted by the second optical fiber splice in the optical fiber splice array, non-even distribution of the intensities of the fourth light beams transmitted by the transmitting module can be implemented. For example, a shape of a light spot formed by the Q fourth light beams is a "convex" shape or a "quasi-convex" shape. An intensity of a convex part in a light spot of the "convex" shape or the "quasi-convex" shape is higher than an intensity of a non-convex part.

In a possible implementation, optical fiber splices in the optical fiber splice array may not be evenly distributed, or may be evenly distributed.

The optical fiber splices in the optical fiber splice array are not evenly distributed, so that the Q fourth light beams transmitted by the transmitting module are not evenly distributed. The optical fiber splices in the optical fiber splice array are evenly distributed, so that the Q fourth light beams transmitted by the transmitting module are evenly distributed.

In a possible implementation, the optical fiber splice array includes a first optical fiber splice array and a second optical fiber splice array, the first optical fiber splice belongs to the first optical fiber splice array, and the second optical fiber splice belongs to the second optical fiber splice array; and the intensity of the fourth light beam emitted by the first optical fiber splice is higher than the intensity of the fourth light beam emitted by the second optical fiber splice; and/or a first spacing between optical fiber splices in the first optical fiber splice array is less than a second spacing between optical fiber splices in the second optical fiber splice array.

The first spacing of the first optical fiber splice array and the second spacing of the second optical fiber splice array may be used to change an angle spacing of the fourth light beams transmitted by the transmitting module, so as to change a spacing between light spots formed by the fourth light beams.

In a possible implementation, the optical fiber light splitting assembly includes a first optical fiber light splitting region and a second optical fiber light splitting region, a first optical fiber light splitter in the first optical fiber light splitting region is connected to the first optical fiber splice in the first optical fiber splice array, and a second optical fiber light splitter in the second optical fiber light splitting region is connected to the second optical fiber splice in the second optical fiber splice array; and a quantity of stages of cascaded first optical fiber light splitters in the first optical fiber light splitting region is less than a quantity of stages of cascaded second optical fiber light splitters in the second optical fiber light splitting region.

The intensity of the fourth light beam transmitted by the transmitting module may be changed by using a quantity of stages of the cascaded optical fiber light splitters.

In a possible implementation, the fourth light beam emitted by the first optical fiber splice corresponds to a region of interest, and the fourth light beam emitted by the second optical fiber splice corresponds to a non-region of interest.

Based on this, an intensity (or referred to as power) of a light spot of the fourth light beam corresponding to the region of interest is higher, and an intensity (or referred to as power) of a light spot of the fourth light beam corresponding to the non-region of interest is lower.

Further, optionally, the region of interest includes a region corresponding to a central field of view of the transmitting module, and the non-region of interest includes a region corresponding to an edge field of view of the transmitting module.

Based on this, the intensity (or referred to as power) of the light spot of the fourth light beam corresponding to the central field of view of the transmitting module is higher, and the intensity (or referred to as power) of the light spot of the fourth light beam corresponding to the edge field of view of the transmitting module is lower.

In a possible implementation, the transmitting module further includes a first lens assembly. The first spacing satisfies Formula 2, and the second spacing satisfies Formula 3.

$$\varphi_1 = D_1/f_1 \text{ Formula 2}$$

$f_1$ is an equivalent focal length of the first lens assembly, $D_1$ is the first spacing, and $\varphi_1$ is an angle spacing of fourth light beams emitted by the first optical fiber splice array.

$$\varphi_2 = D_2/f_1 \text{ Formula 3}$$

$f_1$ is the equivalent focal length of the first lens assembly, $D_2$ is the second spacing, and $\varphi_2$ is an angle spacing of fourth light beams emitted by the second optical fiber splice array.

In a possible implementation, the optical fiber light splitter is a light splitter that evenly splits light.

In this way, the optical fiber light splitter in the conventional technology may be compatible.

In a possible implementation, the light source assembly includes a spot light source.

According to a third aspect, this application provides a transmitting module, including a light source array and a second lens assembly, where light sources in the light source array are not evenly distributed; the light source array is configured to transmit K fifth light beams, where K is an integer greater than 2; and the second lens assembly is configured to propagate the K fifth light beams from the light source array to a detection region.

Based on the foregoing solution, by using the light sources that are not evenly distributed in the light source array, angle spacings of the K fifth light beams transmitted by the transmitting module may be controlled to be not evenly distributed, so that light spots of the K fifth light beams may be controlled to be not evenly distributed.

In a possible implementation, the light source array includes a first light source array and a second light source array, and a third spacing between light sources in the first light source array is different from that between light sources in the second light source array.

The third spacing of the first light source array in the light source array, the fourth spacing of the second light source array in the light source array, and an equivalent focal length of the second lens assembly are designed, so that the light sources in the light source array can be not evenly distributed.

In a possible implementation, the first light source array includes a light source that is in the light source array and that corresponds to a region of interest, and the second light source array includes a light source that is in the light source array and that corresponds to a non-region of interest; and the third spacing is less than the fourth spacing.

The third spacing is designed to be less than the fourth spacing, so that light spots of fifth light beams corresponding to the region of interest are denser, and light spots of fifth light beams corresponding to the non-region of interest are sparser.

Further, optionally, the region of interest includes a region corresponding to a central field of view of the transmitting module, and the non-region of interest includes a region corresponding to an edge field of view of the transmitting module.

Based on this, light spots of fifth light beams corresponding to the central field of view of the transmitting module are denser, so that the transmitting module has a smaller angular resolution; and light spots of fifth light beams corresponding to the edge field of view of the transmitting module are sparser, so that the transmitting module has a larger angular resolution.

In a possible implementation, the third spacing satisfies Formula 4.

$$\omega_1 = D_3 / f_2 \quad \text{Formula 4}$$

$f_2$ is an equivalent focal length of the second lens assembly, $D_3$ is the third spacing, and $\omega_1$ is an angle spacing of fifth light beams transmitted by the light sources in the first light source array.

The fourth spacing satisfies Formula 5.

$$\omega_2 = D_4 / f_2 \quad \text{Formula 5}$$

$f_2$ is the equivalent focal length of the second lens assembly, $D_4$ is the fourth spacing, and $\omega_2$ is an angle spacing of fifth light beams transmitted by the light sources in the second light source array.

In a possible implementation, an intensity of a current injected into the light source in the first light source array is higher than an intensity of a current injected into the light source in the second light source array.

In this way, the intensity of the fifth light beam transmitted by the light source in the first light source array may be higher than the intensity of the fifth light beam transmitted by the light source in the second light source array.

In a possible implementation, the intensity of the fifth light beam corresponding to the region of interest is higher than the intensity of the fifth light beam corresponding to the non-region of interest. Further, optionally, the region of interest includes the region corresponding to the central field of view of the transmitting module, and the non-region of interest includes the region corresponding to the edge field of view of the transmitting module.

Based on this, an intensity (or referred to as power) of a light spot of the fifth light beam corresponding to the central field of view of the transmitting module is higher, and an intensity (or referred to as power) of a light spot of the fifth light beam corresponding to the edge field of view of the transmitting module is lower.

In a possible implementation, the light source array includes a one-dimensional light source array or a two-dimensional light source array.

According to a fourth aspect, this application provides a receiving module, including a detector array and a third lens assembly, where detectors in the detector array are not evenly distributed; the third lens assembly is configured to propagate L sixth light beams from a detection region to the detector array, where L is an integer greater than 2; and the detector array is configured to convert the L sixth light beams into electrical signals, where the electrical signals are used to determine information about the detection region.

Based on the foregoing solution, the detectors in the detector array are designed to be not evenly distributed, so that the detector array receives the sixth light beams that are not evenly distributed.

In a possible implementation, the detector array includes a first detector array and a second detector array, and a fifth spacing between detectors in the first detector array is different from a sixth spacing between detectors in the second detector array.

Based on the foregoing solution, the fifth spacing in the first detector array is designed to be different from the sixth spacing in the second detector array, so that the detectors in the detector array are not evenly distributed.

In a possible implementation, the first detector array includes a detector corresponding to a region of interest, and the second detector array includes a detector corresponding to a non-region of interest; and the fifth spacing is less than the sixth spacing.

Because an angle spacing of sixth light beams corresponding to the detection region is smaller, and an angle spacing of sixth light beams corresponding to the non-region of interest is larger, the fifth spacing is designed to be less than the sixth spacing, so that the detector array can receive the sixth light beam as accurately as possible, thereby helping improve energy utilization of the sixth light beam.

In a possible implementation, the fifth spacing satisfies Formula 6.

$$\Omega_1 = D_5 / f_3 \quad \text{Formula 6}$$

$f_3$ is an equivalent focal length of the third lens assembly, $D_5$ is the fifth spacing, and $\Omega_1$ is an angle spacing of sixth light beams received by the detectors in the first detector array.

The sixth spacing satisfies Formula 7.

$$\Omega_2 = D_6 / f_3 \quad \text{Formula 7}$$

$f_3$ is the equivalent focal length of the third lens assembly, $D_6$ is the sixth spacing, and $\Omega_2$ is an angle spacing of sixth light beams received by the detectors in the second detector array.

According to a fifth aspect, this application provides a receiving module, including an optical fiber splice array and a detector array, where optical fiber splices in the optical fiber splice array are not evenly distributed, and the optical fiber splice array is connected to the detector array through an optical fiber; the optical fiber splice array is configured to propagate H seventh light beams from a detection region to the detector array, where H is an integer greater than 2; and the detector array is configured to convert the H seventh light beams into electrical signals, where the electrical signals are used to determine information about the detection region.

Based on the foregoing receiving module, spacings between optical fiber splices in the optical fiber splice array are designed to be not evenly distributed, so that the receiving module can receive the seventh light beams that are not evenly distributed.

In a possible implementation, the optical fiber splice array includes a third optical fiber splice array and a fourth optical fiber splice array, and a seventh spacing between optical fiber splices in the third optical fiber splice array is different from an eighth spacing between optical fiber splices in the fourth optical fiber splice array.

The sixth spacing in the optical fiber splice array is designed to be different from the seventh spacing, so that the optical fiber splices in the optical fiber splice array can be not evenly distributed.

In a possible implementation, the third optical fiber splice array corresponds to a region of interest, and the fourth optical fiber splice array corresponds to a non-region of interest; and the seventh spacing is less than the eighth spacing.

Because an angle spacing of seventh light beams corresponding to the detection region is smaller, and an angle spacing of seventh light beams corresponding to the non-region of interest is larger, the seventh spacing is designed to be less than the eighth spacing, so that the optical fiber splice can receive the seventh light beam as accurately as possible, thereby helping improve energy utilization of the seventh light beam.

In a possible implementation, the module further includes a fourth lens assembly. The seventh spacing satisfies Formula 8.

$$\eta_1 = D_7 / f_4 \quad \text{Formula 8}$$

$f_4$ is an equivalent focal length of the fourth lens assembly, $D_7$ is the seventh spacing, and $\eta_1$ is an angle spacing of seventh light beams received by the third optical fiber splice array.

The eighth spacing satisfies Formula 9.

$$\eta_2 = D_8 / f_4 \quad \text{Formula 9}$$

$f_4$ is the equivalent focal length of the fourth lens assembly, $D_8$ is the eighth spacing, and $\eta_2$ is an angle spacing of seventh light beams received by the fourth optical fiber splice array.

In a possible implementation, the detector array includes a detector array in which detectors are evenly distributed.

According to a sixth aspect, this application provides a detection apparatus, including the transmitting module according to the first aspect or any one of the implementations of the first aspect and the receiving module according to the fourth aspect or any one of the implementations of the fourth aspect; or the transmitting module according to the second aspect or any one of the implementations of the second aspect and the receiving module according to the fourth aspect any one of the implementations of the fourth aspect; or the transmitting module according to the third aspect or any one of the implementations of the third aspect and the receiving module according to the fourth aspect or any one of the implementations of the fourth aspect; or the transmitting module according to the first aspect or any one of the implementations of the first aspect and the receiving module according to the fifth aspect or any one of the implementations of the fifth aspect; or the transmitting module according to the second aspect or any one of the implementations of the second aspect and the receiving module according to the fifth aspect or any one of the implementations of the fifth aspect; or the transmitting module according to the third aspect or any one of the implementations of the third aspect and the receiving module according to the fifth aspect or any one of the implementations of the fifth aspect.

In a possible implementation, the detection apparatus further includes a scanning module; and the scanning module is configured to: reflect a second light beam, a fourth light beam, or a fifth light beam from the transmitting module to a detection region, and reflect a sixth light beam from the detection region to the receiving module, where the sixth light beam is obtained by reflecting the second light beam, the fourth light beam, or the fifth light beam by a target in the detection region.

According to a seventh aspect, this application provides a terminal device, including a control apparatus and the detection apparatus according to the sixth aspect or any one of the implementations of the sixth aspect, where the control apparatus is configured to control the detection apparatus to detect the detection region.

For technical effects that can be achieved in any aspect in the sixth aspect and the seventh aspect, refer to the foregoing descriptions of the beneficial effects in the first aspect to the fifth aspect. Details are not described herein again.

**BRIEF DESCRIPTION OF DRAWINGS**

FIG. 1 is a diagram of a possible application scenario according to this application;

FIG. 2 is a diagram of a structure of a transmitting module according to this application;

FIG. 3a is a diagram of a second light beam obtained through splitting by a first light splitter according to this application;

FIG. 3b is a diagram of light spots formed by a second light beam and a third light beam according to this application;

FIG. 4a is a diagram of distribution, in a first direction, of a light spot of a light beam transmitted by a transmitting module according to this application;

FIG. 4b is a diagram of distribution, in a first direction, of a light spot of a light beam transmitted by another transmitting module according to this application;

FIG. 5 is a diagram of a structure of a light splitting assembly according to this application;

FIG. 6a is a diagram of a structure of another transmitting module according to this application;

FIG. 6b is a diagram of a structure of still another transmitting module according to this application;

FIG. 7 is a diagram of a structure of yet another transmitting module according to this application;

FIG. 8a is a diagram of a structure of an optical fiber splice array according to this application;

FIG. 8b is a diagram of a structure of another optical fiber splice array according to this application;

FIG. 9a is a diagram of distribution, in a first direction, of a light spot of a fourth light beam transmitted by a transmitting module according to this application;

FIG. 9b is a diagram of a structure of an optical fiber light splitting assembly according to this application;

FIG. 10a is a diagram of a structure of yet still another transmitting module according to this application;

FIG. 10b is a diagram of distribution of a light spot of a fourth light beam according to this application;

FIG. 11 is a diagram of a structure of a further transmitting module according to this application;

FIG. 12a is a diagram of another light source array according to this application;

FIG. 12b is a diagram of a structure of a receiving module according to this application;

FIG. 13 is a diagram of a structure of a further transmitting module according to this application;

FIG. 14 is a diagram of a structure of a receiving module according to this application;

FIG. 15 is a diagram of a structure of a detector array according to this application;

FIG. 16 is a diagram of a structure of another receiving module according to this application;

FIG. 17 is a diagram of a structure of still another receiving module according to this application;

FIG. 18 is a diagram of a structure of another detector array according to this application;

FIG. 19a is a diagram of a structure of an optical fiber splice array according to this application;

FIG. 19b is a diagram of a structure of another optical fiber splice array according to this application; and

FIG. 20 is a diagram of a structure of a detection apparatus according to this application.

## DESCRIPTION OF EMBODIMENTS

The following describes in detail embodiments of this application with reference to accompanying drawings.
Some terms in this application are described below. It should be noted that these explanations are for ease of understanding by a person skilled in the art, and are not intended to limit the protection scope claimed by this application.

1. Region of interest (region of interest)

A region of interest is a region that is to be processed and that is outlined in a form of a box, a circle, an ellipse, or an irregular polygon in a detection region. Generally, the region of interest contains a detection target or a region that requires special attention.

2. Light spot

A light spot is usually energy density (or referred to as intensity or power) distribution formed by a light beam in angular space. The energy density distribution of the light spot may be in a form of low at two ends and high in the middle (or referred to as a "convex" shape or a "quasi-convex" shape). For example, the energy density distribution may be in a form of normal distribution (Normal distribution) or a form similar to normal distribution (Normal distribution). For another example, energy density of the light spot may alternatively be evenly distributed.

3. Angle spacing

An angle spacing of light beams is an angle formed between two adjacent light beams.

4. Instantaneous field of view (instantaneous field of view, iFOV)

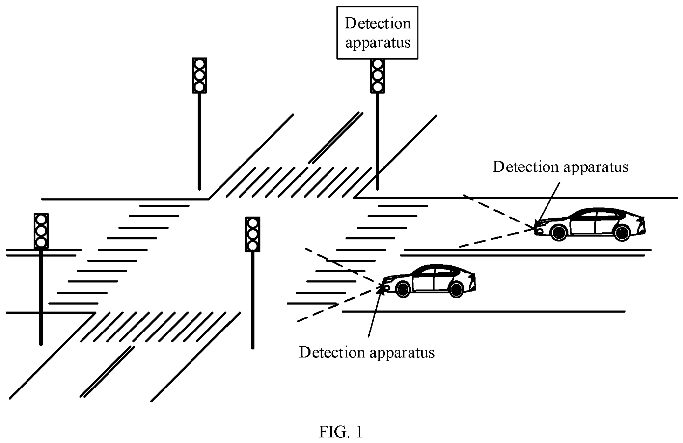

An instantaneous field of view is a light receiving angle or a field of view of a single detection element in a sensor. Generally, a smaller iFOV indicates a smaller minimum recognizable unit and a higher image spatial resolution.
The foregoing describes some terms used in this application, and the following describes possible application scenarios of this application.
In a possible implementation, the transmitting module may be integrated into a detection apparatus, and the detection apparatus may be installed on a vehicle. The detection apparatus may be, for example, a lidar. FIG. 1 is an example diagram of a possible application scenario of this application. In this application scenario, a detection apparatus is installed on a front part of a vehicle. It may be understood that the detection apparatus may alternatively be installed on

8

another location of the vehicle, for example, in any one or more directions of the four directions: front, rear, left, and right, to capture information about an environment around the vehicle.

In a possible application scenario, a working principle of the detection apparatus is as follows: The detection apparatus transmits a light beam to a detection region. If a target exists in the detection region, the target may reflect the received light beam back to the detection apparatus (where the reflected light beam may be referred to as an echo signal), and then the detection apparatus determines association information of the target based on the echo signal. Specifically, the detection apparatus may obtain, in real time or periodically, longitude and latitude, a speed, and an orientation of the vehicle, or association information (for example, a distance of a target, a speed of the target, and/or a posture of the target) of the target (for example, another surrounding vehicle, a pedestrian, or an obstacle) in a specific range. Further, optionally, the detection apparatus may send the obtained information to a control apparatus in the vehicle, so that the control apparatus performs vehicle route planning and the like based on the obtained information. For example, a location of the vehicle may be determined by using the longitude and the latitude. Alternatively, a traveling direction and a destination of the vehicle in a future period of time are determined by using the speed and the orientation. Alternatively, a quantity of obstacles around the vehicle, a density of the obstacles, and the like are determined by using a distance to a surrounding object. Further, optionally, assisted driving, autonomous driving, or the like of the vehicle may be implemented by combining a function of an advanced driving assistant system (advanced driving assistant system, ADAS).

It should be understood that the foregoing application scenario is merely an example. The transmitting module provided in this application may be further used in another possible scenario, but is not limited to the scenario shown in the foregoing example. For example, the transmitting module may alternatively be integrated as a vehicle light, and the vehicle light is installed on a vehicle. In addition to implementing an illumination function, the vehicle light may further implement an adaptive driving beam system (adaptive driving beam, ADB), or may project a complex graphic of a text or a traffic sign light, or may project a video image, or the like, thereby adding functions of assisted driving and entertainment. For another example, the transmitting module may alternatively be integrated into a light, and is installed on a stage as a stage light. For example, a detection apparatus integrated with the transmitting module provided in this application may be further installed on an uncrewed aerial vehicle, and is used as an airborne detection apparatus. For another example, the detection apparatus integrated with the transmitting module provided in this application may alternatively be installed in a road side unit (road side unit, RSU), and used as a roadside traffic detection apparatus. Refer to FIG. 1. Intelligent vehicle-road cooperative communication and the like may be implemented. For another example, the detection apparatus integrated with the transmitting module provided in this application may alternatively be installed on an automated guided vehicle (automated guided vehicle, AGV). The AGV is a transport vehicle equipped with an electromagnetic or optical automatic navigation apparatus, capable of driving along a specified navigation path, and having security protection and various load-moving functions. These are not listed herein one by one. It should be noted that the application scenarios described in this application are intended to describe the technical solutions in this application more clearly, and do not constitute a limitation on the technical solutions provided in this application.

For example, the foregoing application scenario may be applied to the fields of self driving, autonomous driving, assisted driving, intelligent driving, connected vehicles, security monitoring, biomedical, surveying and mapping (for example, three-dimensional drawing), or the like.

As described in the background, in the conventional technology, light beams transmitted by a lidar are evenly projected to a detection region. As a result, this causes a waste of energy of the light beam transmitted by the lidar.

In view of the foregoing problem, this application provides a transmitting module. The transmitting module can implement non-even projection of light beams into a detection region, to meet a detection requirement and improve energy utilization of the projected light beam. For example, in light beams projected by the transmitting module into the detection region, an intensity of a light beam corresponding to a region of interest is higher than an intensity of a light beam corresponding to a non-region of interest, and/or an angle spacing of light beams corresponding to the region of interest is greater than an angle spacing of light beams corresponding to the non-region of interest.

Based on the foregoing content, the following specifically describes the transmitting module provided in this application with reference to the accompanying drawings.

**Embodiment 1**

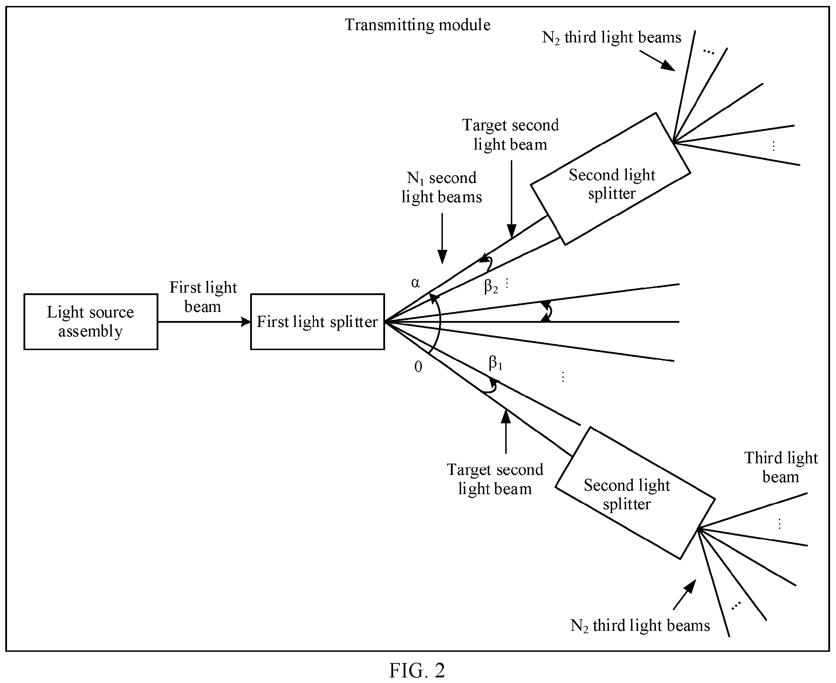

FIG. 2 is a diagram of a structure of a transmitting module according to this application. The transmitting module includes a light source assembly and M light splitters, where M is an integer greater than 1. The light source assembly is configured to transmit a first light beam. A first light splitter in the M light splitters is configured to split the first light beam into $N_1$ second light beams, where a field of view range of the $N_1$ second light beams is $[0, \alpha]$, 0 is a start location (or referred to as a lower boundary or a lower edge) of a field of view of the $N_1$ second light beams, $\alpha$ is an end location (or referred to as an upper boundary or an upper edge) of the field of view of the $N_1$ second light beams, and $N_1$ is an integer greater than 2. It may be understood that the field of view of the $N_1$ second light beams is $\alpha$, and represents a maximum field of view range that can be detected by using the $N_1$ second light beams. A second light splitter in the M light splitters is configured to split a target second light beam in the $N_1$ second light beams into $N_2$ third light beams, where the target second light beam is a second light beam in a field of view range $[0, \beta_1]$, or the target second light beam is a second light beam in a field of view range $[\beta_2, \alpha]$, where $\beta_2$ is less than $\alpha$, and $\beta_1$ is greater than 0 and less than $\beta_2$. It may be understood that, in FIG. 2, an example in which two second light splitters are included is used. Alternatively, there may be one second light splitter. This is not limited in this application.

In a possible implementation, the target second light beam is a second light beam at a boundary of the field of view formed by the $N_1$ second light beams. It may alternatively be understood as that the target second light beam is a second light beam at the lower boundary of the $N_1$ second light beams, or the target second light beam is a second light beam at the upper boundary of the $N_1$ second light beams. In other words, the target second light beam is a second light beam at 0° in the $N_1$ second light beams, or the target second light beam is a second light beam at $\alpha$ in the $N_1$ second light beams.

It may be understood that a field of view range of the $N_1$ second light beams is further represented as $[-\alpha/2, \alpha/2]$. Correspondingly, the target second light beam is a second light beam in a field of view range $[-\alpha/2, \beta_1]$, or the target second light beam is a second light beam in a field of view range $[\beta_2, \alpha/2]$, where $\beta_2$ is less than $\alpha/2$, and $\beta_1$ is greater than $-\alpha/2$ and less than $\beta_2$. In a possible implementation, the target second light beam is a second light beam at $-\alpha/2$ in the $N_1$ second light beams, or the target second light beam is a second light beam at $\alpha/2$ in the $N_1$ second light beams.

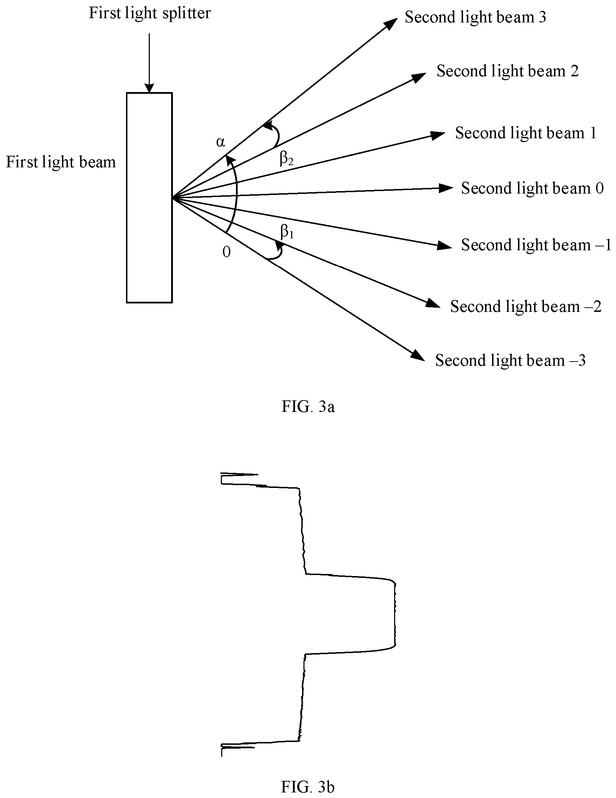

FIG. 3a is a diagram of the $N_1$ second light beams obtained through splitting by the first light splitter according to this application. In this example, the first light splitter splits the first light beam into seven second light beams. The seven second light beams are a second light beam 0, a second light beam 1, a second light beam -1, a second light beam 2, a second light beam -2, a second light beam 3, and a second light beam -3, and the target second light beams include the second light beam 3 and the second light beam -3. It may be understood that the second light beam 3 and the second light beam -3 are second light beams at boundaries of a field of view formed by the seven second light beams. In other words, the second light beam 3 and the second light beam -3 are two target second light beams in the seven second light beams, the second light beam -3 is in the field of view range $[0, \beta_1]$, and the second light beam -3 is in the field of view range $[\beta_2, \alpha]$. A field of view range $[0, \alpha]$ formed by the seven second light beams is an angle range between the second light beam -3 and the second light beam 3.

Based on the transmitting module, the second light beam and the third light beam are obtained by using the M light splitters. Because the second light beam is obtained by splitting the first light beam by the first light splitter, and the third light beam is obtained by splitting the target second light beam by the second light splitter, intensities of the second light beam and the third light beam may not be even, so that energy distribution of the light beam transmitted by the transmitting module can be adjusted, thereby improving energy utilization of the first light beam transmitted by the light source assembly. For example, a shape of a light spot formed by the third light beam and a second light beam other than the target second light beam in the $N_1$ second light beams may be a "convex" shape or a "quasi-convex" shape. Refer to FIG. 3b. An intensity of a convex part in a light spot of the "convex" shape or the "quasi-convex" shape is higher than an intensity of a non-convex part. Further, an angle spacing of second light beams may be the same as or different from an angle spacing of third light beams. For example, an angle spacing corresponding to the convex part in the light spot of the "convex" shape or the "quasi-convex" shape is less than an angle spacing corresponding to the non-convex part.

In a possible implementation, an intensity of the second light beam is higher than an intensity of the third light beam. Specifically, the intensity of the second light beam is $P/N_1$, the intensity of the third light beam is $P/(N_1 \times N_2)$, and P is an intensity of the first light beam. Further, optionally, intensities of the $N_1$ second light beams may be the same, and intensities of the $N_2$ third light beams may be the same. It may be understood that, if P represents power of the first light beam, power of the second light beam is $P/N_1$, and power of the third light beam is $P/(N_1 \times N_2)$.

In a possible implementation, an angle spacing of the $N_1$ second light beams is less than an angle spacing of the $N_2$ third light beams. It may alternatively be understood as that the $N_1$ second light beams are denser, and the $N_2$ third light beams are sparser. It should be noted that angle spacings of the $N_1$ second light beams are the same, and angle spacings of the $N_2$ third light beams are the same.

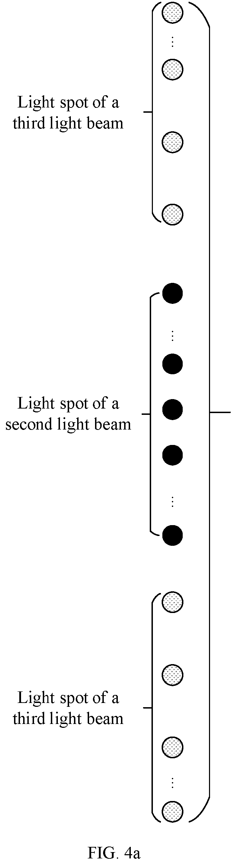

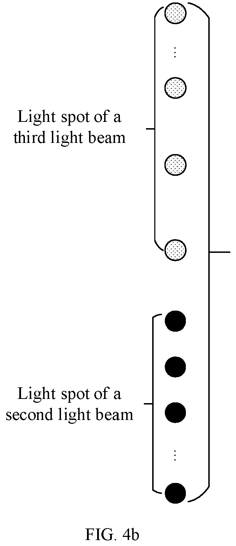

FIG. 4a is an example diagram of distribution, in a first direction, of light spots of the second light beam and the third light beam that are transmitted by the transmitting module. For example, the second light beam includes two target second light beams. A spacing between the light spots of the second light beams is less than a spacing between the light spots of the third light beams, and an intensity of the light spot of the second light beam is higher than an intensity of the light spot of the third light beam. In FIG. 4a, a deeper color indicates higher intensity of the light spot. It should be noted that the transmitting module may further include a second light splitter. Based on this, for distribution, in the first direction, of light spots of light beams transmitted by the transmitting module, refer to FIG. 4b.

For example, a second light beam other than the target second light beam in the $N_1$ second light beams corresponds to a region of interest, and the $N_2$ third light beams correspond to a non-region of interest. Specifically, an angle spacing of the second light beams that are other than the target second light beam in the $N_1$ second light beams and that correspond to the region of interest is smaller, and an angle spacing of the $N_2$ third light beams corresponding to the non-region of interest is larger; and/or an intensity (or referred to as power) of a light spot of the second light beam that is other than the target second light beam in the $N_1$ second light beams and that corresponds to the region of interest is higher, and an intensity (or referred to as power) of a light spot of the $N_2$ third light beams corresponding to the non-region of interest is lower. The intensity (or referred to as power) of the light spot of the second light beam that is other than the target second light beam in the $N_1$ second light beams and that corresponds to the region of interest is higher, and the intensity (or referred to as power) of the light spot of the $N_2$ third light beams corresponding to the non-region of interest is lower. In this way, energy utilization of the light beam transmitted by the transmitting module can be improved.

Further, the region of interest may be, for example, a region corresponding to a central field of view of the transmitting module, and the non-region of interest may be a region corresponding to an edge field of view (or referred to as a non-central field of view) of the transmitting module. Specifically, light spots of the second light beam that is other than the target second light beam in the $N_1$ second light beams and that corresponds to the central field of view of the transmitting module are denser, and light spots of the $N_2$ third light beams corresponding to the edge field of view of the transmitting module are sparser. An intensity (or referred to as power) of the light spot of the second light beam that is other than the target second light beam in the $N_1$ second light beams and that corresponds to the central field of view of the transmitting module is higher, and an intensity (or referred to as power) of the light spot of the $N_2$ third light beams corresponding to the edge field of view of the transmitting module is lower. It may be understood that denser light spots correspond to a higher angular resolution, and sparser light spots correspond to a lower angular resolution. In this way, the central field of view of the transmitting module may have a smaller angular resolution, and the edge field of view of the transmitting module may have a larger angular resolution. Alternatively, the region of interest may be a region in which a "concerned" target (for example, a dynamic target and/or a static target) is located, and the non-region of interest is a region other than the region of interest. In this way, the region in which the "concerned" target is located may have a smaller angular resolution, and the other region may have a larger angular resolution. It may be understood that the region of interest and the non-region of interest may alternatively be other possible regions. This is not limited in this application.

In a possible implementation, a full field of view range of the transmitting module corresponds to at least one region of interest. A shape of the region of interest may alternatively be a square, a circle, an ellipse, or another regular or irregular shape. This is not limited in this application.

The following separately describes the function components and structures shown in FIG. 2, to provide an example of a specific implementation solution.

1. Light source assembly

For example, the light source component may be, for example, a point light source, and the point light source may include, but is not limited to, a laser diode (laser diode, LD), a diode pumped solid state laser (diode pumped solid state laser, DPSS), an optical fiber laser, a vertical cavity surface emitting laser (vertical cavity surface emitting laser, VCSEL), or an edge emitting laser (edge emitting laser, EEL).

2. Light splitter

In a possible implementation, the transmitting module includes M light splitters, where M is an integer greater than 1. The M light splitters include a first light splitter and a second light splitter, where the first light splitter belongs to a first-stage light splitter, and the second light splitter belongs to a second-stage light splitter. Further, the M light splitters may further include a third light splitter, where the third light splitter belongs to a third-stage light splitter, and the rest may be deduced by analogy. The first-stage light splitter may include one first light splitter, the second-stage light splitter may include one second light splitter, or may include two second light splitters, and the third-stage light splitter may include one third light splitter, or may include two third light splitters. A quantity of light splitters included in each stage of light splitters may be flexibly designed based on an actual requirement. This is not limited in this application. Specifically, the first light splitter is configured to split the first light beam into $N_1$ second light beams, the second light splitter is configured to split a target second light beam in the $N_1$ second light beams into $N_2$ third light beams, and the third light splitter is configured to split a target third light beam in the $N_2$ third light beams into $N_3$ fourth light beams. A field of view range of the $N_2$ third light beams is $[0, \gamma]$, and the target third light beam is a third light beam in a field of view range $[0, \beta_3]$, or a third light beam in a field of view range $[\beta_4, \gamma]$, where $\beta_3$ is greater than 0 and less than $\beta_4$, and $\beta_4$ is less than $\gamma$. In a possible implementation, the target third light beam is a third light beam at $-\gamma/2$ in the $N_2$ third light beams, or the target third light beam is a third light beam at $\gamma/2$ in the $N_2$ third light beams.

It may be understood that a field of view range of the $N_2$ third light beams is $[-\gamma/2, \gamma/2]$. Correspondingly, the target third light beam is a third light beam in a field of view range $[-\gamma/2, \beta_3]$, or the target third light beam is a second light beam in the field of view range $[\beta_4, \gamma/2]$, where $\beta_4$ is less than $\gamma/2$, and $\beta_3$ is greater than $-\gamma/2$ and less than $\beta_4$. In a possible implementation, the target third light beam is a third light beam at $-\gamma/2$ in the $N_2$ third light beams, or the target third light beam is a third light beam at $\gamma/2$ in the $N_2$ third light beams.

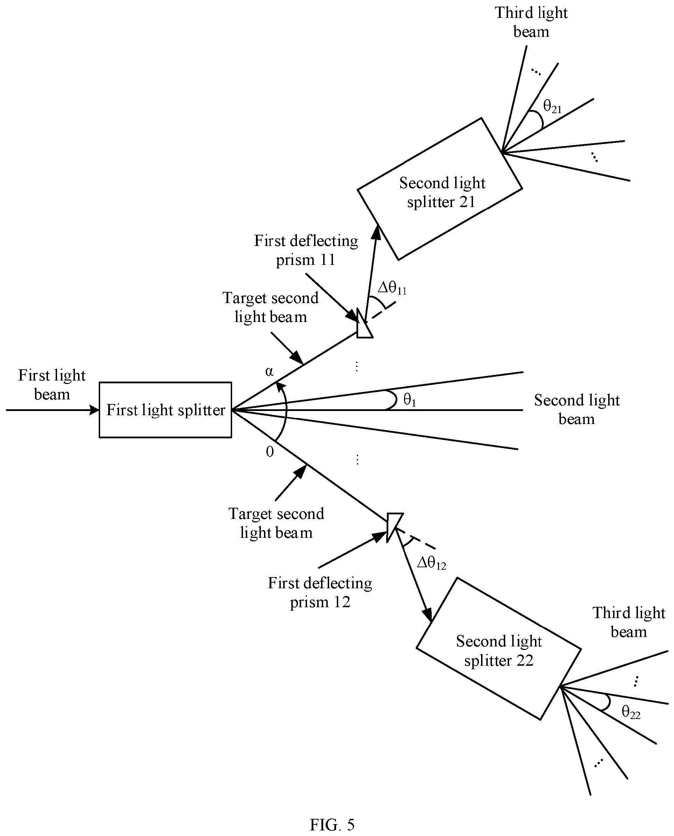

To prevent crosstalk between the second light beam obtained through splitting by the first light splitter and the third light beam obtained through splitting by the second light splitter, the transmitting module may further include M-1 first deflecting prisms, where one second light splitter corresponds to one first deflecting prism, one third light splitter corresponds to one second deflecting prism, and the rest may be deduced by analogy. The first deflecting prism is configured to: deflect the target second light beam by a first angle and then propagate the target second light beam to the second light splitter. Specifically, the first deflecting prism is configured to deflect the target second light beam by the first angle in a direction away from the central field of view of the $N_1$ second light beams. Refer to FIG. 5. A first deflecting prism 11 deflects a target second light beam in the $N_1$ second light beams by a first angle $\Delta\theta_{11}$, and then propagates the target second light beam to a second light splitter 21. A first deflecting prism 12 deflects a target second light beam in the $N_1$ second light beams by a first angle $\Delta\theta_{12}$, and then propagates the target second light beam to a second light splitter 22. A second deflecting prism is configured to: deflect the target third light beam by a second angle and then propagate the target second light beam to the third light splitter. It should be noted that the first deflecting prism and the second deflecting prism may be the same or may be different. Further, the first angle by which the first deflecting prism deflects the target second light beam may be the same as or different from the second angle by which the second deflecting prism deflects the target third light beam. This is not limited in this application.

With reference to FIG. 5, the first light beam is split into $N_1$ second light beams by using the first light splitter, angle spacings of the $N_1$ second light beams are the same, and are all $\theta_1$, and an intensity of each of the $N_1$ second light beams is $P/N_1$. The target second light beam in the $N_1$ second light beams is deflected by the first deflecting prism 11 by the first angle $\Delta\theta_{11}$ and then is emitted into the second light splitter 21. The second light splitter 21 splits the received second light beam into $N_{21}$ third light beams. Angle spacings of the $N_{21}$ third light beams are the same, and are all $\theta_{21}$, and an intensity of each of the $N_{21}$ second light beams is $P/N_1N_{21}$. The target second light beam in the $N_1$ second light beams is deflected by the first deflecting prism 12 by the first angle $\Delta\theta_{12}$ and then is emitted into the second light splitter 22. The second light splitter 22 splits the received second light beam into $N_{22}$ third light beams. An angle spacing of the $N_{22}$ third light beams is $\theta_{22}$, and an intensity of each of the $N_{22}$ third light beams is $P/N_1N_{22}$. Further, $\theta_1$ is less than $\theta_{22}$, $\theta_1$ is less than $\theta_{21}$, and $\theta_{21}$ and $\theta_{22}$ may be the same or different.

For ease of description of the solution, the following uses an example in which $\theta_{21}$ is the same as $\theta_{22}$ and is represented by $\theta_2$; and uses an example in which $N_{22}$ is the same as $N_{21}$ and is represented by $N_2$. An example in which the first-stage light splitter includes one first light splitter, and each stage after the first stage includes two corresponding light splitters is used for description. For example, the second-stage light splitter includes two second light splitters, the third-stage light splitter includes two third light splitters, and by analogy, an $m^{th}$-stage light splitter includes two $m^{th}$ light splitters.

As shown in Table 1, this application provides a relationship between angle spacings between light beams obtained through splitting by using m stages of light splitters, where m is an integer greater than 1.

**Table 1 Relationship between angle spacings of light beams obtained through splitting by using m stages of light splitters**

| Light splitter | Angle spacing |
|---|---|
| $N_1$ second light beams obtained by using a first light splitter | $\theta_1$ |
| Angle spacing between a second light beam and a third light beam that are adjacent | $\Delta\theta_1 - \theta_2(N_2-1)/2$ |
| $N_2$ third light beams obtained by using a second light splitter | $\theta_2$ |
| ... | ... |
| $m^{th}$ light beam obtained by using an $(m-1)^{th}$ light splitter and $(m+1)^{th}$ light beam obtained by using an $m^{th}$ light splitter | $\Delta\theta_{m-1} - \theta_m(N_m-1)/2$ |
| $(m+1)^{th}$ light beam obtained by using the $m^{th}$ light splitter | $\theta_m$ |

It can be learned from Table 1 that the angle spacing of the $N_1$ second light beams obtained by using the first light splitter is $\theta_1$, the angle spacing of the $N_2$ third light beams obtained by using the second light splitter is $\theta_2$, and the angle spacing between the second light beam and the third light beam that are adjacent and that are on two sides of $\beta_1$ satisfies Formula 1. It may alternatively be understood as that an angle spacing between the third light beam and the second light beam adjacent to the third light beam satisfies Formula 1.

$$\Delta\theta_1 - \theta_2(N_2-1)/2 \quad \text{Formula 1}$$

By analogy, $N_{m-1}$ $m^{th}$ light beams are obtained by using the $(m-1)^{th}$ light splitter, and $N_m$ $(m+1)^{th}$ light beams are obtained by using the $m^{th}$ light splitter. An angle spacing between an $(m+1)^{th}$ light beam and an $m^{th}$ light beam adjacent to the $(m+1)^{th}$ light beam satisfies Formula 10.

$$\Delta\theta_{m-1} - \theta_m(N_m-1)/2 \quad \text{Formula 10}$$

Table 2 shows a relationship between intensities of light beams obtained through splitting by using m stages of light splitters according to this application.

**Table 2 Relationship between intensities of light beams obtained through splitting by using m stages of light splitters**

| Light splitter | Intensity |
|---|---|
| $N_1$ second light beams obtained by using a first light splitter | $P/N_1$ |
| $N_2$ third light beams obtained by using a second light splitter | $P/(N_1 \times N_2)$ |
| ... | ... |
| $N_{m-1}$ $m^{th}$ light beams obtained by using an $m^{th}$ light splitter | $P/\displaystyle\prod_{i=1:m-1} N_i$ |

It can be learned from Table 2 that, an intensity of each second light beam in the $N_1$ second light beams obtained through splitting by the first light splitter is $P/N_1$, an intensity of each third light beam in the $N_2$ third light beams obtained through splitting by the second light splitter is $P/(N_1 \times N_2)$, and the rest may be deduced by analogy. An intensity of each $m^{th}$ light beam in the $N_{m-1}$ $m^{th}$ light beams obtained through splitting by the $m^{th}$ light splitter is $P/\Pi_{i=1:m-1}$ $N_i$.

For example, the light splitter may be a DOE. The DOE has high diffraction efficiency, unique dispersion performance, more design freedom, and wide material selection.

It should be noted that the transmitting module may further include another possible component. This is not limited in this application. For example, the transmitting module may further include a collimating assembly. The collimating assembly may include, for example, a microlens array (microlens array, MLA) or a cylindrical mirror. The cylindrical mirror includes but is not limited to a flat convex cylindrical mirror (or referred to as a flat convex lens), a flat concave cylindrical mirror (or referred to as a flat concave lens), a double convex cylindrical mirror (double convex lens), and a double concave cylindrical mirror (double concave lens).

Based on the foregoing content, the following provides two possible implementations of the transmitting module with reference to a specific hardware structure, to further facilitate understanding of the structure of the transmitting module. It should be noted that, in the foregoing components and structures, unless otherwise stated or there is a logic conflict, other possible transmitting modules may be formed based on internal logical relationships of the components and structures. The following two transmitting modules are merely examples.

Structure 1: The transmitting module includes a light source assembly, a collimating assembly, a first light splitter, a first deflecting prism, and a second light splitter.

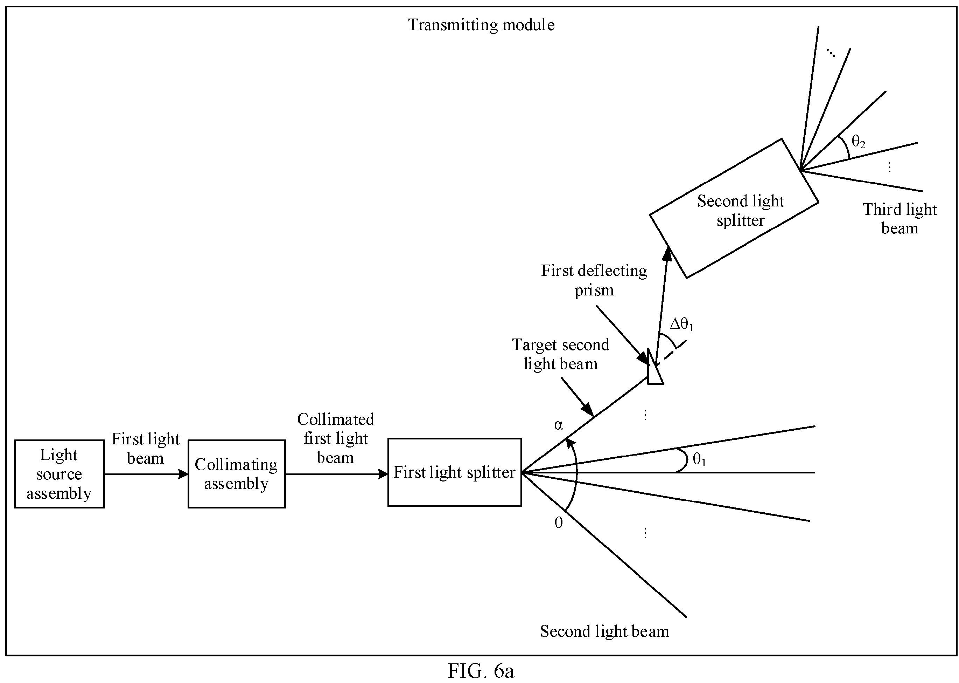

FIG. 6a is a diagram of a structure of another transmitting module according to this application. In this example, the transmitting module includes one first light splitter and one second light splitter. A first light beam transmitted by the light source assembly is collimated by the collimating assembly and then propagated to the first light splitter, where the first light splitter is configured to split the first light beam into $N_1$ second light beams, and $N_1$ is an integer greater than 2. A target second light beam in the $N_1$ second light beams is deflected by a first deflecting prism by a first angle, and then propagated to the second light splitter, where the second light splitter is configured to split the received target second light beam into $N_2$ third light beams. Second light beams other than the target second light beam in the $N_1$ second light beams are emitted to a detection region, and the $N_2$ third light beams are also emitted to the detection region. For the $N_1$ second light beams and the $N_2$ third light beams, refer to the foregoing related descriptions. Details are not described herein again.

Further, the second light beam other than the target second light beam in the $N_1$ second light beams forms a first light spot in the detection region, and the $N_2$ third light beams form a second light spot in the detection region. An intensity of the first light spot is higher than an intensity of the second light spot, and/or a spacing between first light spots is less than a spacing between second light spots.

Structure 2: The transmitting module includes a light source assembly, a collimating assembly, a first light splitter, a second light splitter, and a third light splitter.

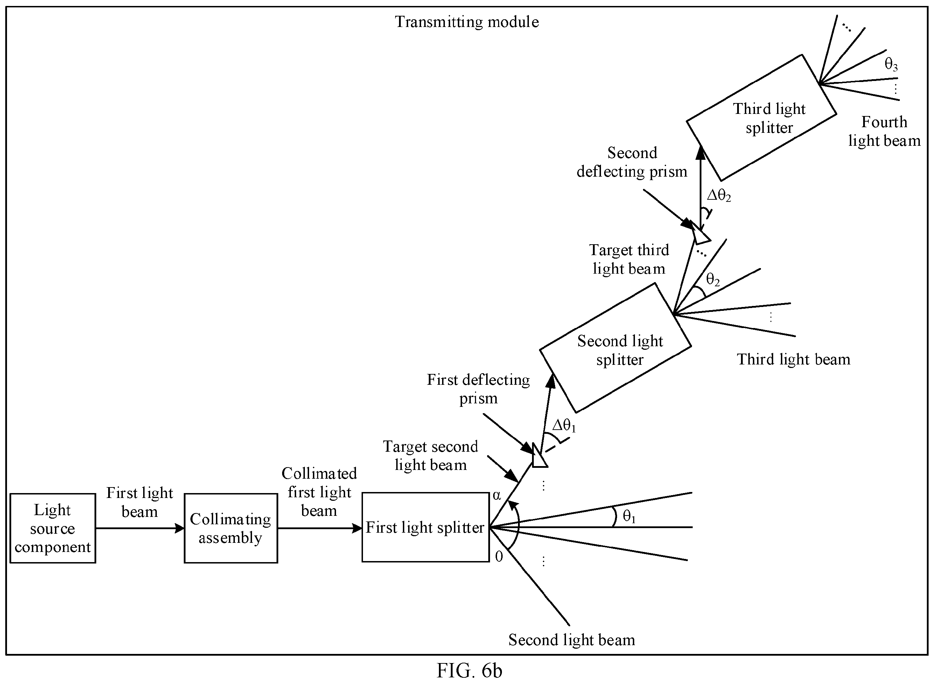

FIG. 6b is a diagram of a structure of still another transmitting module according to this application. In this example, the transmitting module includes one first light splitter, one second light splitter, and one third light splitter. A first light beam transmitted by the light source assembly is collimated by the collimating assembly and then propagated to the first light splitter, where the first light splitter is configured to split the first light beam into $N_1$ second light beams, and $N_1$ is an integer greater than 2. A target second light beam in the $N_1$ second light beams is deflected by a first deflecting prism by a first angle, and then propagated to the second light splitter, where the second light splitter is configured to split the received target second light beam into $N_2$ third light beams, and $N_2$ is an integer greater than 2. A target third light beam in the $N_2$ third light beams is deflected by a second deflecting prism by a second angle, and then propagated to the third light splitter, where the third light splitter is configured to split the target third light beam into $N_3$ fourth light beams, an angle spacing of the $N_3$ fourth light beams is $\theta_3$, and $N_3$ is an integer greater than 2. A second light beam other than the target second light beam in the $N_1$ second light beams is emitted to a detection region, a third light beam other than the target third light beam in the $N_2$ third light beams is emitted to the detection region, and the $N_3$ fourth light beams are emitted to the detection region.

Further, the second light beam other than the target second light beam in the $N_1$ second light beams forms a first light spot in the detection region, the $N_2$ third light beams form a second light spot in the detection region, and the $N_3$ fourth light beams form a third light spot in the detection region. An intensity of the first light spot is higher than an intensity of the second light spot, and the intensity of the second light spot is higher than an intensity of the third light spot; and/or a spacing between first light spots is less than a spacing between second light spots, and/or the spacing between the second light spots is less than a spacing between third light spots.

It should be noted that a plurality of stages of light splitters may alternatively be an integrated module, or may be at a plurality of independent stages. In addition, m stages of light splitters may alternatively be understood as m layers of light splitters.

## Embodiment 2

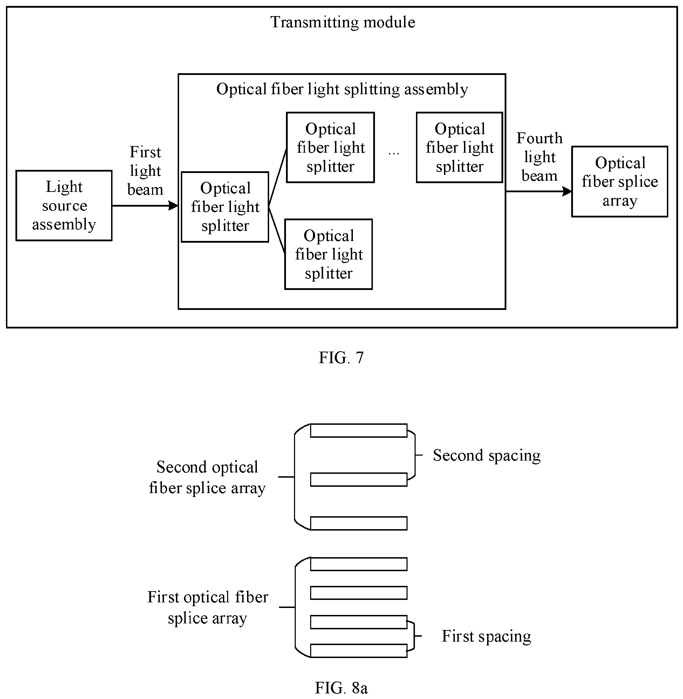

FIG. 7 is a diagram of a structure of yet another transmitting module according to this application. The transmitting module includes a light source assembly, an optical fiber light splitting assembly, and an optical fiber splice array. The optical fiber light splitting assembly is connected to the optical fiber splice array (optical fiber splice) by using an optical fiber. The optical fiber light splitting assembly includes at least two stages of cascaded optical fiber light splitters. The light source assembly is configured to transmit a first light beam. The optical fiber light splitting assembly is configured to: split the first light beam into Q fourth light beams, and transmit the Q fourth light beams by using the optical fiber splice array, where Q is an integer greater than 2, and an intensity of a fourth light beams emitted by a first optical fiber splice is different from an intensity of a fourth light beam emitted by a second optical fiber splice in the optical fiber splice array.

In a possible implementation, the two stages of cascaded optical fiber light splitters are connected through an optical fiber. It may be understood that a larger quantity of cascaded optical fiber light splitters indicates a lower intensity of the obtained fourth light beam. Non-even distribution of intensities can be implemented by using different stages of cascaded optical fiber light splitters.

Based on the foregoing solution, because the intensity of the fourth light beam emitted by the first optical fiber splice is different from the intensity of the fourth light beam emitted by the second optical fiber splice in the optical fiber splice array, non-even distribution of the intensities of the fourth light beams transmitted by the transmitting module can be implemented. For example, a shape of a light spot formed by the Q fourth light beams is a "convex" shape or a "quasi-convex" shape. For a light spot of a "convex" shape or a "quasi-convex" shape, refer to the foregoing related descriptions. Details are not described herein again.

The following separately describes the function components and structures shown in FIG. 7, to provide an example of a specific implementation solution.

For the light source assembly, refer to the foregoing description of the light source assembly in FIG. 2. Details are not described herein again.

3. Optical fiber splice array

In a possible implementation, an optical fiber splice in the optical fiber splice array is an end apparatus of an optical fiber, and a spacing between two adjacent optical fiber splices in the optical fiber splice array may be flexibly adjusted. Further, optionally, the optical fiber splices in the optical fiber splice array may not be evenly distributed, or may be evenly distributed.

FIG. 8a is a diagram of a structure of an optical fiber splice array according to this application. In this example, the optical fiber splice array includes a first optical fiber splice array and a second optical fiber splice array. A spacing between optical fiber splices in the first optical fiber splice array is referred to as a first spacing, and a spacing between optical fiber splices in the second optical fiber splice array is referred to as a second spacing, where the first spacing is less than the second spacing. In this example, first spacings between the optical fiber splices in the first optical fiber splice array are the same, and second spacings between the optical fiber splices in the second optical fiber splice array are also the same.

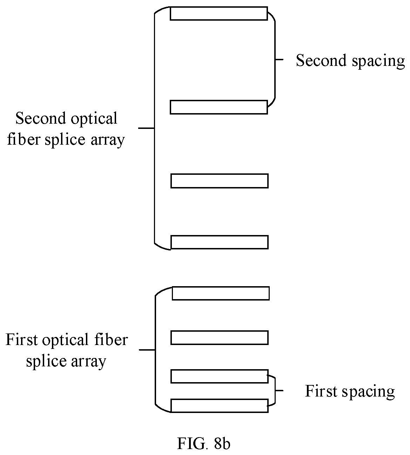

FIG. 8b is a diagram of a structure of another optical fiber splice array according to this application. In this example, the optical fiber splice array includes a first optical fiber splice array and a second optical fiber splice array. A spacing between optical fiber splices in the first optical fiber splice array is referred to as a first spacing, and a spacing between optical fiber splices in the second optical fiber splice array is referred to as a second spacing, where the first spacing is less than the second spacing. In this example, first spacings between the optical fiber splices in the first optical fiber splice array are different (for example, gradient), and second spacings between the optical fiber splices in the second optical fiber splice array are also different (for example, gradient). It may be understood that a maximum first spacing in the first optical fiber splice array is less than a minimum second spacing in the second optical fiber splice array.

In a possible implementation, the first optical fiber splice array corresponds to a region of interest, and the second optical fiber splice array corresponds to a non-region of interest. For descriptions of the region of interest and the non-region of interest, refer to the foregoing related descriptions. Details are not described herein again. Further, the first spacing between the optical fiber splices in the first optical fiber splice array is less than the second spacing between the optical fiber splices in the second optical fiber splice array. Based on this, light spots of fourth light beams corresponding to the region of interest are denser, and light spots of fourth light beams corresponding to the non-region of interest are sparser.

Further, optionally, the region of interest includes a region corresponding to a central field of view of the transmitting module, and the non-region of interest includes a region corresponding to an edge field of view of the transmitting module. Based on this, light spots of a fourth light beam corresponding to the central field of view of the transmitting module are denser, and light spots of a fourth light beam corresponding to the edge field of view of the transmitting module are sparser.

It should be noted that first spacings between different optical fiber splices in the first optical fiber splice array may be the same or may be different, and second spacings between different optical fiber splices in the second optical fiber splice array may be the same or may be different. This is not limited in this application. Further, if different first spacings in the first optical fiber splice array are the same, spacings between light spots of corresponding fourth light beams may be the same; or if different first spacings in the first optical fiber splice array are different, spacings between light spots of corresponding fourth light beams may be different. If different second spacings in the second optical fiber splice array are the same, spacings of light spots of corresponding fourth light beams may be the same; or if different second spacings in the second optical fiber array are different, spacings of light spots of corresponding fourth light beams may be different. For a manner of determining the first spacing, refer to Formula 2. For a manner of determining the second spacing, refer to Formula 3. Details are not described herein again.

It may be understood that a spacing between the first optical fiber splice array and the second optical fiber splice array may be greater than the first spacing, less than the first spacing, or equal to the first spacing, or may be greater than the second spacing, less than the second spacing, or equal to the second spacing.

4. Optical fiber light splitting assembly

In a possible implementation, the optical fiber light splitting assembly includes a first optical fiber light splitting region and a second optical fiber light splitting region, at least one of the first optical fiber light splitting region and the first optical fiber light splitting region includes at least two stages of cascaded optical fiber light splitters, and each optical fiber light splitter is configured to split a received light beam (for example, a first light beam or a second light beam) into at least two. For example, the first optical fiber light splitting region includes at least two stages of cascaded optical fiber light splitters, and the second optical fiber light splitting region includes one stage of optical fiber light splitter. For another example, the first optical fiber light splitting region includes at least two stages of cascaded optical fiber light splitters, and the second optical fiber light splitting region includes at least two stages of optical fiber light splitters. Different optical fiber light splitters may split a received light beam into a same quantity or different quantities of light beams, and different optical fiber light splitters may have different light splitting intensities for a received light beam. This is not limited in this application. It should be noted that the optical fiber light splitting assembly may alternatively include more than two optical fiber splitting regions, for example, include three optical fiber splitting regions or four optical fiber splitting regions, and different optical fiber splitting regions have different quantities of cascaded optical fiber light splitters.

For ease of description of the solution, an example in which the optical fiber light splitting assembly includes two optical fiber splitting regions, that is, includes a first optical fiber splitting region and a second optical fiber splitting region is used for description in the following.

In a possible implementation, a quantity of stages of cascaded optical fiber light splitters in the first optical fiber light splitting region is less than a quantity of stages of cascaded optical fiber light splitters in the second optical fiber light splitting region. Based on this, an intensity of a fourth light beam obtained by using the first optical fiber light splitting region is higher than an intensity of a fourth light beam obtained by using the second optical fiber light splitting region. Further, the first optical fiber light splitting region corresponds to the region of interest, and the second optical fiber light splitting region corresponds to the non-region of interest. For descriptions of the region of interest and the non-region of interest, refer to the foregoing related descriptions. Details are not described herein again. Based on this, the intensity of the fourth light beam corresponding to the region of interest is higher, and the intensity of the fourth light beam corresponding to the non-region of interest is lower.

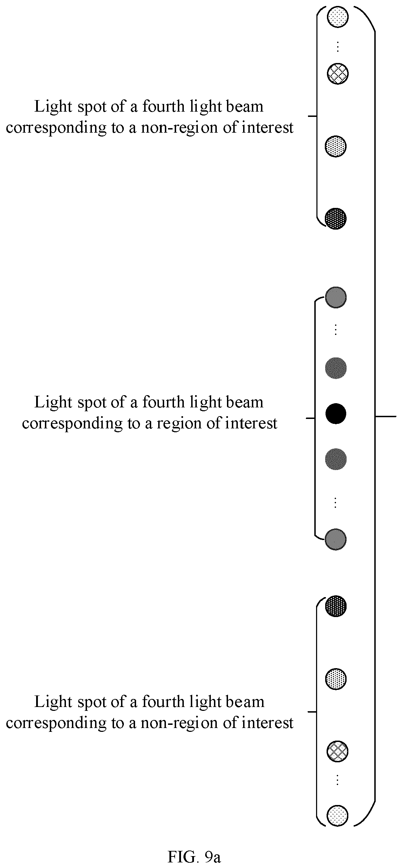

Further, optionally, intensities of the fourth light beams corresponding to the region of interest may be the same or may be gradient, and intensities of the fourth light beams corresponding to the non-region of interest may be the same or may be gradient. This is not limited in this application. FIG. 9a is a diagram of distribution, in a first direction, of a light spot of a fourth light beam transmitted by the transmitting module according to this application. In this example, the intensities of the fourth light beams corresponding to the region of interest are gradient. An intensity of a light spot of a fourth light beam corresponding to a center of the region of interest is greater than an intensity of a light spot of a fourth light beam close to the non-region of interest. The intensities of the fourth light beams corresponding to the non-region of interest are also gradient. An intensity of a light spot of a fourth light beam close to the region of interest is greater than an intensity of a light spot of a fourth light beam away from the region of interest. A deeper color filled in FIG. 9a indicates a higher intensity of a light spot.

Further, optionally, the region of interest includes the region corresponding to the central field of view of the transmitting module, and the non-region of interest includes the region corresponding to the edge field of view of the transmitting module. Based on this, the intensity (or referred to as power) of the light spot of the fourth light beam corresponding to the central field of view of the transmitting module is higher, and the intensity (or referred to as power) of the light spot of the fourth light beam corresponding to the edge field of view of the transmitting module is lower.

In a possible implementation, an optical fiber light splitter in the first optical fiber light splitting region may be connected to the first optical fiber splice in the first optical fiber splice array through an optical fiber, and an optical fiber light splitter in the second optical fiber light splitting region may be connected to the second optical fiber splice in the second optical fiber splice array through an optical fiber.

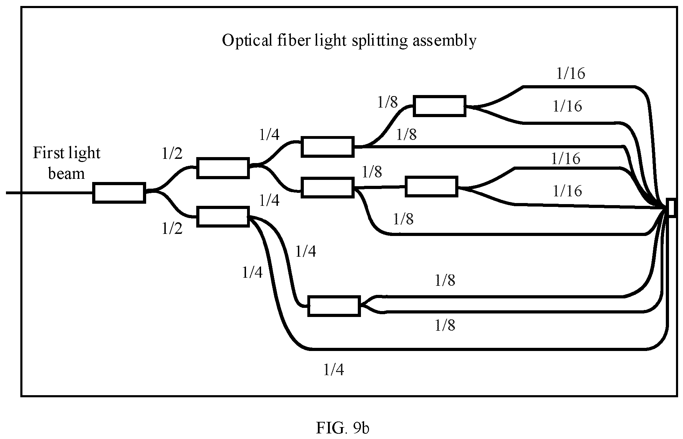

FIG. 9b is a diagram of a structure of an optical fiber light splitting assembly according to this application. The optical fiber light splitting assembly includes a first optical fiber light splitting region, a second optical fiber light splitting region, and a third optical fiber light splitting region. The first optical fiber light splitting region includes two stages of cascaded optical fiber light splitters, the second optical fiber light splitting region includes three stages of cascaded optical fiber light splitters, and the third optical fiber light splitting region includes four stages of cascaded optical fiber light splitters. In this example, each stage of optical fiber light splitter splits a received light beam into two light beams with equal intensities. It may alternatively be understood as that the optical fiber light splitter in this example is an optical fiber light splitter that evenly splits light, and a light splitting intensity ratio is 50:50. In this example, an intensity of a first light beam is 1, and a loss of each light splitter is ignored. Based on this, the two stages of cascaded optical fiber light splitters in the first optical fiber light splitting region are configured to split an intensity of the first light beam from the light source assembly into fourth light beams whose intensities are 1/4, the three stages of cascaded optical fiber light splitters in the second optical fiber light splitter region are configured to split the intensity of the first light beam from the light source assembly into fourth light beams whose intensities are 1/8, and the four stages of cascaded light splitters in the third optical fiber light splitting region are configured to split the intensity of the first light beam into fourth light beams whose intensities are 1/16. It may alternatively be understood as that a fourth light beam whose intensity is 1/4 is obtained by splitting the first light beam by the first optical fiber light splitting region in the optical fiber light splitting assembly, a fourth light beam whose intensity is 1/8 is obtained by splitting the first light beam by the second optical fiber light splitting region in the optical fiber light splitting assembly, and a fourth light beam whose intensity is 1/16 is obtained by splitting the first light beam by the third optical fiber light splitting region in the optical fiber light splitting assembly.

It may be understood that the transmitting module may further include another possible structure. For example, the transmitting module may further include a first lens group. The first lens assembly includes at least one lens. The lens may be, for example, a spherical lens (for example, a concave lens or a convex lens), or may be an aspheric lens. A combination of a plurality of spherical lenses and/or aspheric lenses is used as the first lens assembly, which helps improve imaging quality of the detection apparatus and reduce an aberration of an optical imaging system. It should be understood that the convex lens and the concave lens have a plurality of different types. For example, the convex lens includes a double-convex lens, a plane-convex lens, and a concave-convex lens, and the concave lens includes a double-concave lens, a plane-concave lens, and a concave-convex lens. Types of the convex lens and the concave lens are not limited in this application.

A material of the lens in the first lens assembly may be an optical material, for example, glass, resin, or crystal. When the material of the lens is the resin, mass of the transmitting module can be reduced. When the material of the lens is the glass, imaging quality of the transmitting module can be further improved. Further, to effectively suppress temperature drift, the first lens assembly includes at least one lens made of a glass material.

Based on the foregoing content, the following provides a possible implementation of the transmitting module with reference to a specific hardware structure, to further facilitate understanding of the structure of the transmitting module. It should be noted that, in the foregoing components or structures, unless otherwise stated or there is a logic conflict, other possible transmitting modules may be formed based on internal logical relationships of the components and structures. The following two transmitting modules are merely examples.

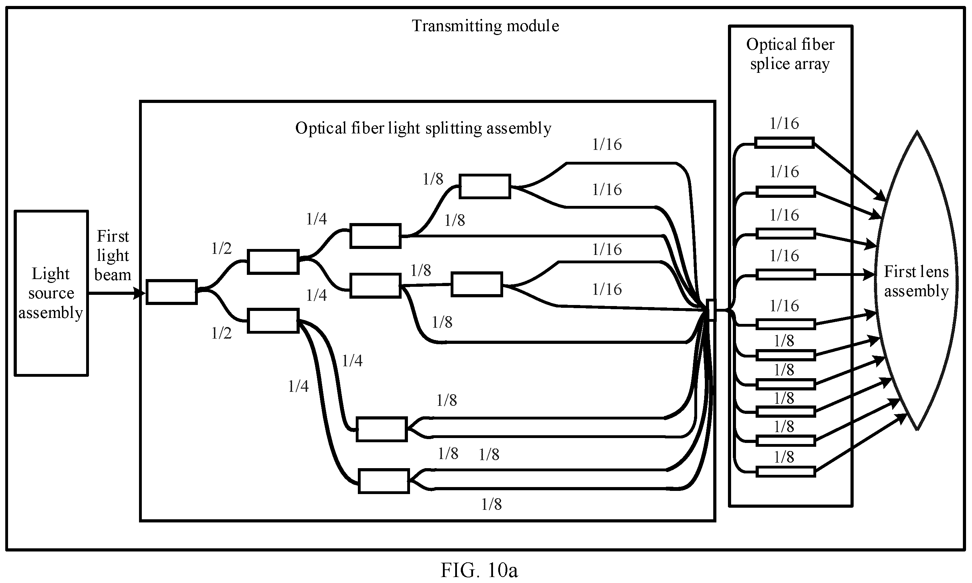

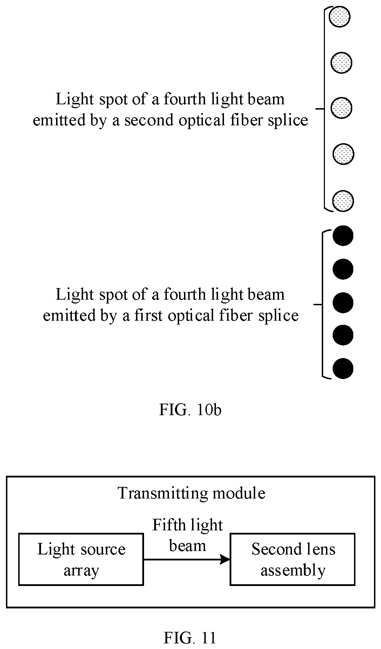

FIG. 10a is a diagram of a structure of yet still another transmitting module according to this application. The transmitting module includes a light source assembly, an optical fiber light splitting assembly, an optical fiber splice array, and a first lens assembly. The optical fiber light splitting assembly includes a first optical fiber light splitting region and a second optical fiber light splitting region, and the optical fiber splice array includes a first optical fiber splice array and a second optical fiber splice array. The first optical fiber light splitting region includes three stages of cascaded optical fiber light splitters, and the second optical fiber light splitting region includes four stages of cascaded optical fiber light splitters. It may alternatively be understood as that in this example, a part of three stages of cascaded optical fiber light splitters is referred to as the first optical fiber light splitting region, and a part of four stages of cascaded optical fiber light splitters are referred to as the second optical fiber light splitting region. The first optical fiber light splitter region and the second optical fiber light splitter may partially share an optical fiber light splitter. An optical fiber splice in the first optical fiber splice array is connected to an optical fiber light splitter in the first optical fiber light splitting region through an optical fiber, and an optical fiber splice in the second optical fiber splice array is connected to an optical fiber light splitter in the second optical fiber light splitting region through an optical fiber. A fourth light beam obtained after the optical fiber light splitter in the first optical fiber light splitting region splits the first light beam is propagated to the first optical fiber splice array through an optical fiber, and is emitted by the first optical fiber splice array; and a fourth light beam obtained after the optical fiber light splitter in the second optical fiber light splitting region splits the first light beam is propagated to the second optical fiber splice array through an optical fiber, and is emitted by the second optical fiber splice array. A first spacing between first optical fiber splices in the first optical fiber splice array is less than a second spacing between second optical fiber splices in the second optical fiber splice array. Therefore, an angle spacing of fourth light beams emitted by the first optical fiber splice array is less than an angle spacing of fourth light beams emitted by the second optical fiber splice array. A quantity of stages of cascaded optical fiber light splitters in the first optical fiber light splitting region is less than a quantity of stages of cascaded optical fiber light splitters in the second optical fiber light splitting region. Therefore, an intensity obtained after the first light beam is split by the first optical fiber light splitting region is 1/8, and an intensity obtained after the first light beam is split by the second optical fiber light splitting region is 1/16. Further, an intensity of the fourth light beam emitted by the first optical fiber splice in the first optical fiber splice array is higher than an intensity of the fourth light beam emitted by the second optical fiber splice in the second optical fiber splice array. Refer to FIG. 10b. A deeper filled color indicates a higher intensity of a light spot.

Further, optionally, the first spacing between the first optical fiber splices in the first optical fiber splice array satisfies Formula 2, and the second spacing between the second optical fiber splices in the second optical fiber splice array satisfies Formula 3.

$$\varphi_1 = D_1/f_1 \quad \text{Formula 2}$$

$f_1$ is an equivalent focal length of the first lens assembly, $D_1$ is the first spacing, and $\varphi_1$ is the angle spacing of the fourth light beams emitted by the first optical fiber splice array.

$$\varphi_2 = D_2/f_1 \quad \text{Formula 3}$$

$f_1$ is the equivalent focal length of the first lens assembly, $D_2$ is the second spacing, and $\varphi_2$ is the angle spacing of the fourth light beams emitted by the second optical fiber splice array.

It should be noted that, in this example, different first spacings in the first optical fiber splice array are the same, and different second spacings in the second optical fiber splice array are the same.

**Embodiment 3**

FIG. 11 is a diagram of a structure of a further transmitting module according to this application. The transmitting module includes a light source array and a second lens assembly. Light sources in the light source array are not evenly distributed. For example, the light source array includes a first light source array and a second light source array, and a third spacing between light sources in the first light source array is different from a fourth spacing between light sources in the second light source array. The light source array is configured to transmit K fifth light beams, where K is an integer greater than 2. The second lens assembly is configured to propagate the K fifth light beams from the light source array to a detection region.

Based on the transmitting module, by using light sources that are not evenly distributed in the light source array, angle spacings of the K fifth light beams transmitted by the transmitting module may be controlled to be not evenly distributed, so that light spots of the K fifth light beams may be controlled to be not evenly distributed. For example, the third spacing of the first light source array, the fourth spacing of the second light source array, and an equivalent focal length of the second lens assembly in the light source array may be used to control the angle spacings of the K fifth light beams to be not evenly distributed. It may be understood that a smaller angle spacing indicates a smaller angular resolution, and a larger angle spacing indicates a larger angular resolution.

It should be noted that third spacings between different light sources in the first light source array may be the same, or may be different; and fourth spacings between different light sources in the second light source array may be the same or may be different. This is not limited in this application. In addition, a spacing between the first light source array and the second light source array may be the same as the third spacing or the fourth spacing, or may be different from both the third spacing and the fourth spacing. This is not limited in this application.

The following separately describes the function components and structures shown in FIG. 11, to provide an example of a specific implementation solution.

5. Light source array

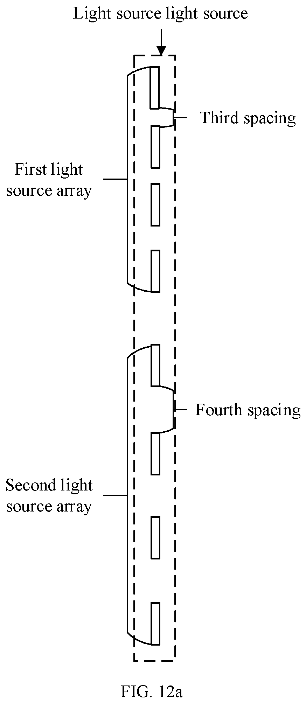

In a possible implementation, the light source array includes m×n light sources, where m is an integer greater than 1, and n is a positive integer, or m is a positive integer, and n is an integer greater than 1. Specifically, the light source array may be a one-dimensional light source array (or referred to as a linear array). Refer to FIG. 12a. In the example, the light source array includes eight light sources. The eight light sources are arranged in a strip shape, and the light source array is not distributed at an equal spacing. Specifically, the light source array includes a first light source array and a second light source array. In this example, sizes of different third spacings in the first light source array are the same, and sizes of different fourth spacings in the second light source array are the same.

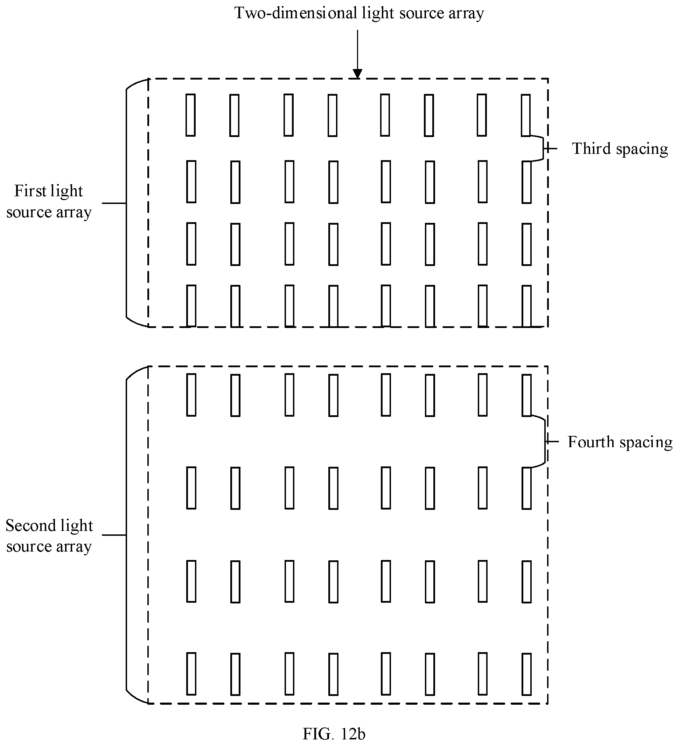

Alternatively, the light source array may be a two-dimensional array (or referred to as a planar array). Refer to FIG. 12b. In the example, the light source array includes 8×8 light sources. The light source array includes a first light source array and a second light source array. A spacing between light sources in the first light source array is referred to as a third spacing, and a spacing between light sources in the second light source array is referred to as a fourth spacing. In this example, sizes of different third spacings are the same, and sizes of different fourth spacings are the same.

In a possible implementation, the first light source array includes a light source that is in the light source array and that corresponds to a region of interest, and the second light source array includes a light source that is in the light source array and that corresponds to a non-region of interest. Specifically, a spacing between light sources in the first light source array that is in the light source array and that corresponds to the region of interest is referred to as a third spacing, and a spacing between light sources in the second light source array that is in the light source array and that corresponds to the non-region of interest is referred to as a fourth spacing, where the third spacing is less than the fourth spacing. Based on this, light spots of fifth light beams corresponding to the region of interest are denser, and light spots of fifth light beams corresponding to the non-region of interest are sparser. Further, optionally, the region of interest includes a region corresponding to a central field of view of the transmitting module, and the non-region of interest includes a region corresponding to an edge field of view of the transmitting module. Based on this, light spots of a fifth light beam corresponding to the central field of view of the transmitting module are denser, and light spots of a fifth light beam corresponding to the edge field of view of the transmitting module are sparser. It may be understood that an arrangement manner of the light sources in the light source array may be adaptively adjusted based on a requirement.

It should be noted that a shape of the light source in the light source arrays shown in FIG. 12a and FIG. 12b is merely an example, and the shape of the light source is not limited in this application. For example, the shape of the light source may alternatively be a circle, a square, or an ellipse.

In a possible implementation, the light source array may implement independent addressing. Independent addressing means that a light source in a light source array may be independently gated (or referred to as lit, turned on, or powered on), and a gated light source may be used to transmit a third light beam. Specifically, a drive current may be input to a light source that needs to be gated, to implement gating of the light source. Specifically, an intensity of a current input to the light source of the first light source array in the light source array is higher than an intensity of a current input to the light source of the second light source array. In this way, an intensity of a fifth light beam transmitted by the light source in the first light source array may be higher than an intensity of a fifth light beam transmitted by the light source in the second light source array. Based on this, the intensity of the fifth light beam corresponding to the region of interest is higher than the intensity of the fifth light beam corresponding to the non-region of interest. Further, optionally, the region of interest includes the region corresponding to the central field of view of the transmitting module, and the non-region of interest includes the region corresponding to the edge field of view of the transmitting module. Based on this, an intensity (or referred to as power) of a light spot of the fourth light beam corresponding to the central field of view of the transmitting module is higher, and an intensity (or referred to as power) of a light spot of the fourth light beam corresponding to the edge field of view of the transmitting module is lower.

In a possible implementation, an addressing manner of the light source array may include but is not limited to gating a light source by column, gating a light source by row, gating a light source based on the region of interest, or the like. It may be understood that the addressing manner of the light source array is further related to a physical connection relationship of the light source. With reference to FIG. 12b, for example, if light sources in a same column in the light source array are connected in series, and light sources in different columns are connected in parallel, the light sources in the light source array may be gated by column. For another example, if light sources in a same row in the light source array are connected in series, and light sources in different rows are connected in parallel, the light sources may be gated by row. For another example, if light sources on each diagonal in the light source array are connected in series, and light sources on different diagonals are connected in parallel, the light sources in the light source array may be gated based on a diagonal.

For example, the light source in the light source array may be, for example, a VCSEL, an EEL, a DPSS, an optical fiber laser, or an LD.

6. Second lens assembly

In a possible implementation, the second optical assembly may include at least one lens. For related descriptions of the lens, refer to the foregoing descriptions of the first lens assembly. Details are not described herein again.

In a possible implementation, the third spacing between the light sources in the first light source array satisfies Formula 4, and the fourth spacing between the light sources in the second light source array satisfies Formula 5.

$$\omega_1 = D_3/f_2 \quad \text{Formula 4}$$

$f_2$ is the equivalent focal length of the second lens assembly, $D_3$ is the third spacing, and $\omega_1$ is the angle spacing of the fifth light beams transmitted by the light sources in the first light source array.

$$\omega_2 = D_4/f_2 \quad \text{Formula 5}$$

$f_2$ is the equivalent focal length of the second lens assembly, $D_4$ is the fourth spacing, and $\omega_2$ is the angle spacing of the fifth light beams transmitted by the light sources in the second light source array.

Based on the foregoing content, the following provides a possible implementation of the transmitting module with reference to a specific hardware structure, to further facilitate understanding of the structure of the transmitting module. It should be noted that, in the foregoing components or structures, unless otherwise stated or there is a logic conflict, other possible transmitting modules may be formed based on internal logical relationships of the components and structures. The following two transmitting modules are merely examples.

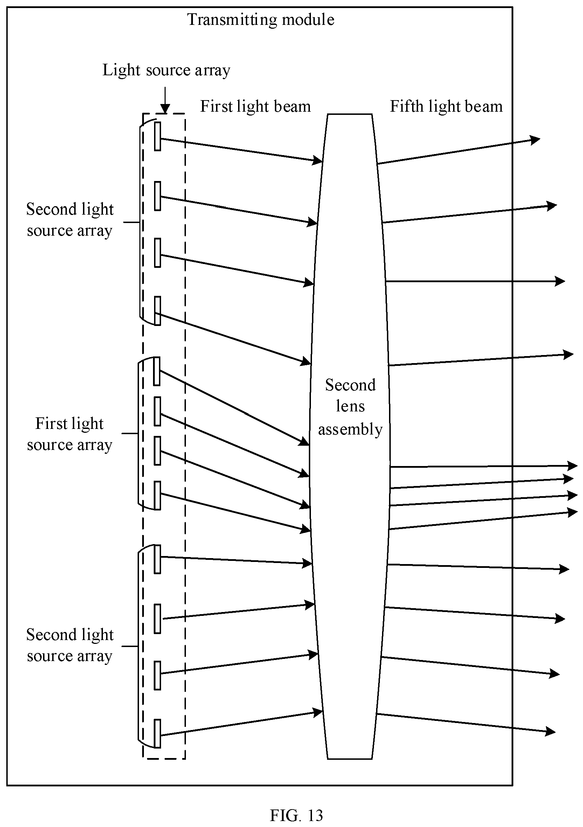

FIG. 13 is a diagram of a structure of a further transmitting module according to this application. The transmitting module includes a light source array and a second lens assembly. The light source array is located on an object-space focal plane of the second lens assembly. In this example, the light source array is a one-dimensional light source array. The light source array includes a first light source array and a second light source array. A third spacing between light sources in the first light source array is less than a fourth spacing between light sources in the second light source array. An intensity of a current injected into the light source in the first light source array is greater than an intensity of a current injected into the light source in the second light source array. For more detailed descriptions of the first light source array and the second light source array, refer to the foregoing related descriptions. Details are not described herein again.

By using the intensities of the currents injected in the first light source array and the second light source array in the light source array, the intensities of the K fifth light beams transmitted by the light source array can be controlled to be not evenly distributed. By using the third spacing of the first light source array and the fourth spacing of the second light source array in the light source array, the angle spacings of the K fifth light beams may be controlled to be not evenly distributed, so that the light spots of the K fifth light beams may be controlled to be not evenly distributed.

**Embodiment 4**

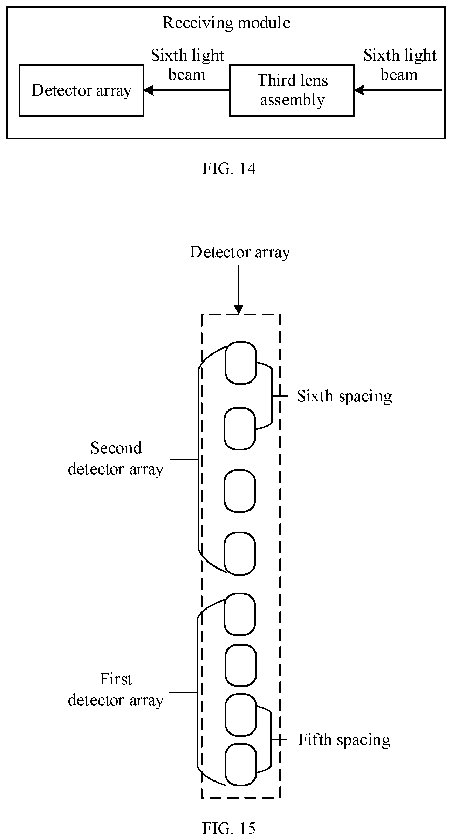

FIG. 14 is a diagram of a structure of a receiving module according to this application. The receiving module includes a detector array and a third lens assembly. Detectors in the detector array are not evenly distributed. For example, the detector array includes a first detector array and a second detector array, and a fifth spacing between detectors in the first detector array is different from a sixth spacing between detectors in the second detector array. The third lens assembly is configured to propagate L sixth light beams from a detection region to the detector array, where L is an integer greater than 2. The detector array is configured to convert the L sixth light beams into electrical signals, and the electrical signals are used to determine information about the detection region.

The information about the detection region includes but is not limited to association information of a target in the detection region, where the association information of the target includes but is not limited to distance information of the target, an orientation of the target, a speed of the target, and/or grayscale information of the target.

Based on the foregoing receiving module, the detectors in the detector array are designed to be not evenly distributed, so that the detector array receives the sixth light beams that are not evenly distributed. For example, the fifth spacing in the first detector array is designed to be different from the sixth spacing in the second detector array, so that the detectors in the detector array are not evenly distributed.

In a possible implementation, the sixth light beam may also be referred to as an echo signal, and is a light beam obtained by reflecting, by the target in the detection region, a light beam transmitted by a transmitting module. With reference to the foregoing Embodiment 1, the L sixth echo signals are echo signals obtained by reflecting, by the target in

the detection region, $N_1$-2 second light beams and $N_2$ third light beams that are transmitted by the transmitting module, that is, $L=N_1$-2+$N_2$. With reference to the foregoing Embodiment 2, the L sixth echo signals are echo signals obtained by reflecting, by the target, Q fourth echo signals transmitted by the transmitting module, that is, L=Q. With reference to the foregoing Embodiment 3, the L sixth echo signals are echo signals obtained by reflecting, by the target, K fifth light beams transmitted by the transmitting module, that is, L=K.

It should be noted that the fifth spacings of the detectors in the first detector array may be the same or may be different, and the sixth spacings of the detectors in the second detector array may be the same or may be different. This is not limited in this application. In addition, a spacing between the first detector array and the second detector array may be different from the fifth spacing and also different from the sixth spacing, or may be equal to the fifth spacing, or may be equal to the sixth spacing. This is not limited in this application.

In a possible implementation, the first detector array includes a detector corresponding to a region of interest, and the second detector array includes a detector corresponding to a non-region of interest. Further, optionally, the fifth spacing is less than the sixth spacing. For the region of interest and the non-region of interest, refer to the foregoing related descriptions. Details are not described herein again. Because the angle spacing of the sixth light beams corresponding to the detection region is smaller, and the angle spacing of the sixth light beams corresponding to the non-region of interest is larger, the fifth spacing is designed to be less than the sixth spacing, so that the detector array can receive the sixth light beam as accurately as possible, thereby helping improve energy utilization of the sixth light beam.

The following separately describes the function components and structures shown in FIG. 14, to provide an example of a specific implementation solution.

### 7. Third lens assembly

In a possible implementation, the third lens assembly is configured to: receive the L sixth light beams from the detection region, and propagate the L sixth light beams to the detector array.

For example, the third lens assembly includes at least one lens. For related descriptions of the lens, refer to the foregoing descriptions of the first lens assembly. Details are not described herein again.

### 8. Detector array

In a possible implementation, the detector array is located on an image-space focal plane of the third lens assembly. For example, the detector array includes a first detector array and a second detector array, a fifth spacing between detectors in the first detector array satisfies Formula 6, and a sixth spacing between detectors in the second detector array satisfies Formula 7.

$$\Omega_1 = D_5/f_3 \text{ Formula 6}$$

$f_3$ is an equivalent focal length of the third lens assembly, $D_5$ is the fifth spacing, and $\Omega_1$ is an angle spacing of sixth light beams received by the detectors in the first detector array.

$$\Omega_2 = D_6/f_3 \text{ Formula 7}$$

$f_3$ is the equivalent focal length of the third lens assembly, $D_6$ is the sixth spacing, and $\Omega_2$ is an angle spacing of sixth light beams received by the detectors in the second detector array.

FIG. 15 is a diagram of a structure of a detector array according to this application. For example, the detector array includes 8×1 detectors, and may also be referred to as a linear detector array. The detector array includes a first detector array and a second detector array. In this example, different fifth spacings in the first detector array are the same, and different sixth spacings in the second detector array are the same. The fifth spacing is less than the sixth spacing. It may be understood that, in this example, the detector array includes two detector arrays with different spacings. The detector array may alternatively include more than two detector arrays with different spacings. Details are not described herein again.

For example, a detector in the detector array may be, for example, a photon detector (photon detector, PD), a positive intrinsic negative (positive intrinsic negative, PIN) photodiode (also referred to as a PIN junction diode), an avalanche photodiode (avalanche photodiode, APD), a single-photo avalanche diode (single-photon avalanche diode, SPAD) array, or a silicon photomultiplier (silicon photomultiplier, SiMP) array.

It may be understood that the detector array provided in FIG. 15 is merely an example, and a quantity of rows and a quantity of columns included in the detector array are not limited in this application. For example, the detector array may alternatively be a multi-row and one-column detector array, or may be another multi-row and multiple-column detector array. These are not listed one by one herein. In addition, a shape of the detector in the detector array may be another possible shape (for example, a circle, a square, or an ellipse). This is not limited in this application.

Based on the foregoing content, the following provides a possible implementation of the receiving module with reference to a specific hardware structure, to further facilitate understanding of the structure of the receiving module. It should be noted that, in the foregoing components or structures, unless otherwise stated or there is a logic conflict, other possible receiving modules may be formed based on internal logical relationships of the components and structures. The following two receiving modules are merely examples.

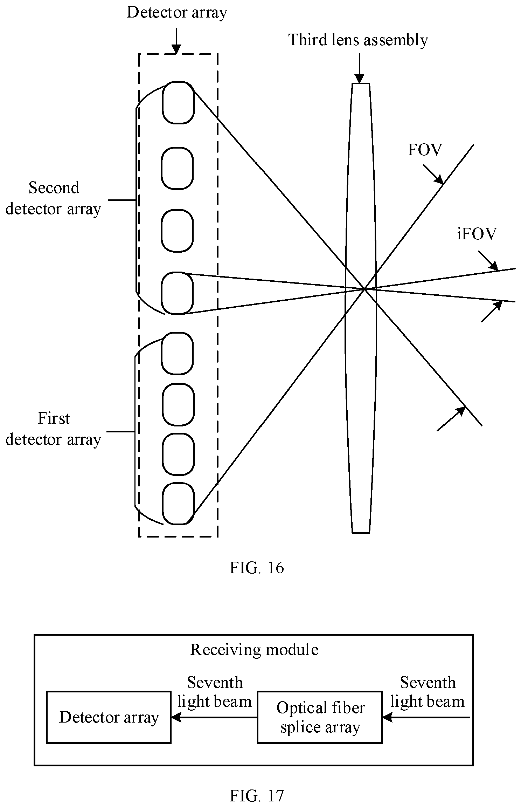

FIG. 16 is a diagram of a structure of another receiving module according to this application. The receiving module includes a detector array and a third lens assembly. The detector array shown in FIG. 15 is used as an example. A sixth light beam is converged to the detector array by using the third lens assembly. It may be understood that the fifth spacing of the first detector array and the equivalent focal length of the third lens assembly determine an iFOV of a single detector in the first detector array, and the sixth spacing of the second detector array and the equivalent focal length of the third lens assembly determine an iFOV of a detector in the second detector array.

**Embodiment 5**

FIG. 17 is a diagram of a structure of still another receiving module according to this application. The receiving module includes an optical fiber splice array and a detector array. The optical fiber splice array is connected to the detector array through an optical fiber. Optical fiber splices in the optical fiber splice array are not evenly distributed. For example, the optical fiber splice array includes a third optical fiber splice array and a fourth optical fiber splice array. A seventh spacing between optical fiber splices in the third optical fiber splice array is different from an eighth spacing between optical fiber splices in the fourth optical fiber splice array. The optical fiber splice array is configured to propagate H seventh light beams from a detection region to the detector array, where H is an integer greater than 2. The detector array is configured to convert the H seventh light beams into electrical signals, and the electrical signals are used to determine information about the detection region. For the information about the detection region, refer to the related description in the foregoing Embodiment 4, and details are not described herein again.

Based on the foregoing receiving module, spacings between optical fiber splices in the optical fiber splice array are designed to be not evenly distributed, so that the receiving module can receive the seventh light beams that are not evenly distributed. For example, the optical fiber splice array may be designed to include the third optical fiber splice array and the fourth optical fiber splice array, and the seventh spacing between the optical fiber splices in the third optical fiber splice array is different from the eighth spacing between the optical fiber splices in the fourth optical fiber splice array, so that spacings between the optical fiber splices in the optical fiber splice array can be not evenly distributed.

In a possible implementation, the third optical fiber splice array corresponds to a region of interest, and the fourth optical fiber splice array corresponds to a non-region of interest. For descriptions of the region of interest and the non-region of interest, refer to the foregoing related descriptions. Details are not described herein again. Because an angle spacing of seventh light beams corresponding to the detection region is smaller, and an angle spacing of seventh light beams corresponding to the non-region of interest is larger, the seventh spacing is designed to be less than the eighth spacing, so that the optical fiber splice can receive the seventh light beam as accurately as possible, thereby helping improve energy utilization of the seventh light beam.

It should be noted that seventh spacings between different optical fiber splices in the third optical fiber splice array may be the same or may be different, and eighth spacings between different optical fiber splices in the fourth optical fiber splice array may be the same or may be different. This is not limited in this application. In addition, a spacing between the third optical fiber splice array and the fourth optical fiber splice array may be the same as the seventh spacing or the eighth spacing, or may be different from both the seventh spacing and the eighth spacing. This is not limited in this application.

In a possible implementation, one optical fiber splice in the optical fiber splice array is connected to one detector in the detector array through an optical fiber.

It should be noted that the receiving module further includes a fourth lens assembly. The fourth lens assembly may include at least one lens. For related descriptions of the lens, refer to the foregoing descriptions of the first lens assembly. Details are not described herein again.

Based on this, the seventh spacing between the optical fiber splices in the third optical fiber splice array satisfies Formula 8, and the eighth spacing between the optical fiber splices in the fourth optical fiber splice array satisfies Formula 9.

$$\eta_1 = D_7 / f_4 \quad \text{Formula 8}$$

$f_4$ is an equivalent focal length of the fourth lens assembly, $D_7$ is the seventh spacing, and $\eta_1$ is an angle spacing of seventh light beams received by the third optical fiber splice array.

$$\eta_2 = D_8/f_4 \quad \text{Formula 9,}$$

wherein

$f_4$ is the equivalent focal length of the fourth lens assembly, $D_8$ is the eighth spacing, and $\eta_2$ is an angle spacing of seventh light beams received by the fourth optical fiber splice array.

The following separately describes the function components and structures shown in FIG. 17, to provide an example of a specific implementation solution.

## 9. Detector array

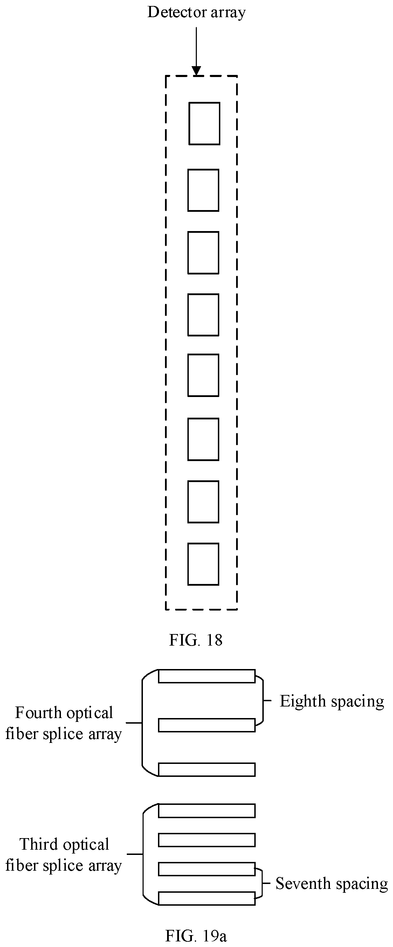

In a possible implementation, the detectors in the detector array may be evenly distributed. Refer to FIG. 18. Alternatively, the detectors in the detector array may not be evenly distributed. Refer to FIG. 15. Details are not described herein again.

It should be noted that FIG. 18 and FIG. 15 provided above are merely two possible distribution manners of the detector array. It should be understood that the detector array may alternatively be another possible distribution manner. This is not limited in this application.

## 10. Optical fiber splice array

For a description of the optical fiber splice in the optical fiber connector array, refer to the foregoing related description. Further, optionally, the optical fiber splices in the optical fiber splice array are not evenly distributed.

FIG. 19a is a diagram of a structure of an optical fiber splice array according to this application. In this example, the optical fiber splice array includes a third optical fiber splice array and a fourth optical fiber splice array. A spacing between optical fiber splices in the third optical fiber splice array is referred to as a seventh spacing, and a spacing between optical fiber splices in the fourth optical fiber splice array is referred to as an eighth spacing, where the seventh spacing is less than the eighth spacing. In this example, the seventh spacings between the optical fiber splices in the third optical fiber splice array are the same, and the eighth spacings between the optical fiber splices in the fourth optical fiber splice array are also the same.

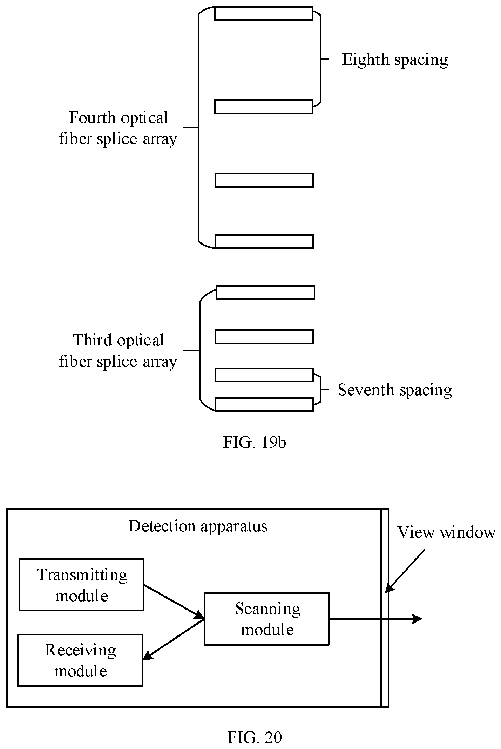

FIG. 19b is a diagram of a structure of another optical fiber splice array according to this application. In this example, the optical fiber splice array includes a third optical fiber splice array and a fourth optical fiber splice array. A spacing between optical fiber splices in the third optical fiber splice array is referred to as a seventh spacing, and a spacing between optical fiber splices in the fourth optical fiber splice array is referred to as an eighth spacing, where the seventh spacing is less than the eighth spacing. In this example, the seventh spacings between the optical fiber splices in the third optical fiber splice array are different, and the eighth spacings between the optical fiber splices in the fourth optical fiber splice array are also different. It may be understood that a maximum seventh spacing in the third optical fiber splice array is less than a minimum eighth spacing in the fourth optical fiber splice array.

It should be noted that the structures of the optical fiber splice array shown in FIG. 19a and FIG. 19b are merely examples. In this application, the optical fiber splice array may alternatively be in another possible non-even distribution manner. This is not limited in this application.

Based on the foregoing described structure and function principles of the transmitting module, this application may further provide a detection apparatus. Refer to FIG. 20. The detection apparatus may include the transmitting module in any one of the foregoing embodiments and the receiving module in any one of the foregoing embodiments, and details are not described herein again. It should be noted that, in the foregoing modules, unless otherwise stated or there is a logic conflict, other possible detection apparatus may be formed based on an internal logical relationship of the modules.

The following example shows six possible structures of the detection apparatus.

Structure 1: The detection apparatus includes the transmitting module in Embodiment 1 and the receiving module in Embodiment 2.

Based on Structure 1, for example, light beams that are transmitted by the transmitting module to a detection region include $N_1$-2 second light beams and $N_2$ third light beams, where an angle spacing of the $N_1$ second light beams is $\theta_1$, and an angle spacing of the $N_2$ third light beams is $\theta_2$. For example, a detector array in the receiving module includes a first detector array and a second detector array. Correspondingly, an angle spacing $\Omega_1$ of a sixth light beam received by a detector in the first detector array is the same as the angle spacing $\theta_1$ of the $N_1$ second light beams, and an angle spacing $\Omega2$ of a sixth light beam received by a detector in the second detector array is the same as the angle spacing $\theta_2$ of the $N_2$ third light beams.

Structure 2: The detection apparatus includes the transmitting module in Embodiment 2 and the receiving module in Embodiment 4.

Based on Structure 2, for example, an optical fiber splice array in the transmitting module includes a first optical fiber splice array and a second optical fiber splice array. For example, a detector array in the receiving module includes a first detector array and a second detector array. Correspondingly, a fifth spacing between detectors in the first detector array is the same as a first spacing between optical fiber splices in the first optical fiber splice array, and a sixth spacing between detectors in the second detector array is the same as a second spacing between optical fiber splices in the second optical fiber splice array.

Structure 3: The detection apparatus includes the transmitting module in Embodiment 3 and the receiving module in Embodiment 4.

Based on Structure 3, for example, a light source array in the transmitting module includes a first light source array and a second light source array, and a detector array in the receiving module includes a first detector array and a second detector array. Correspondingly, a fifth spacing between detectors in the first detector array is the same as a third spacing between light sources in the first light source array, and a sixth spacing between detectors in the second detector array is the same as a fourth spacing between light sources in the second light source array. It may alternatively be understood as that the light sources in the light source array are in a one-to-one correspondence with the detectors in the detector array.

Structure 4: The detection apparatus includes the transmitting module in Embodiment 1 and the receiving module in Embodiment 5.

Based on Structure 4, for example, light beams that are transmitted by the transmitting module to a detection region include $N_1-2$ second light beams and $N_2$ third light beams, where an angle spacing of the $N_1$ second light beams is $\theta_1$, and an angle spacing of the $N_2$ third light beams is $\theta_2$. For example, an optical fiber splice array in the receiving module includes a third optical fiber splice array and a fourth optical fiber splice array. Correspondingly, an angle spacing $\eta_1$ of a seventh light beam received by the third optical fiber splice array is the same as the angle spacing $\theta_1$ of the $N_1$ second light beams, and an angle spacing $\eta_2$ of a seventh light beam received by the fourth optical fiber splice array is the same as the angle spacing $\theta_2$ of the $N_2$ third light beams.

Structure 5: The detection apparatus may alternatively include the transmitting module in Embodiment 2 and the receiving module in Embodiment 5.

Based on Structure 5, for example, an optical fiber splice array in the transmitting module includes a first optical fiber splice array and a second optical fiber splice array, and an optical fiber splice array in the receiving module includes a third optical fiber splice array and a fourth optical fiber splice array. Correspondingly, a seventh spacing between optical fiber splices in the third optical fiber splice array is the same as a first spacing between optical fiber splices in the first optical fiber splice array, and an eighth spacing between optical fiber splices in the fourth optical fiber splice array is the same as a second spacing between optical fiber splices in the second optical fiber splice array.

Structure 6: The detection apparatus includes the transmitting module in Embodiment 3 and the receiving module in Embodiment 5.

Based on Structure 6, for example, a light source array in the transmitting module includes a first light source array and a second light source array, and an optical fiber splice array in the receiving module includes a third optical fiber splice array and a fourth optical fiber splice array. Correspondingly, a seventh spacing between optical fiber splices in the third optical fiber splice array is the same as a third spacing between light sources in the first light source array, and an eighth spacing between optical fiber splices in the fourth optical fiber splice array is the same as a fourth spacing between light sources in the second light source array.

Further, optionally, the detection apparatus may further include a scanning module. Refer to FIG. 20. The scanning module is configured to emit (for example, reflect) a received light beam to the detection region.

In a possible implementation, light beams transmitted by the transmitting module are distributed in a first direction, and the scanning module may perform scanning in a second direction, to implement two-dimensional scanning in the detection region. For example, the first direction is perpendicular to the second direction. Alternatively, the light beams transmitted by the transmitting module are distributed in the second direction, and the scanning module may perform scanning in the first direction, to implement two-dimensional scanning in the detection region. Scanning is performed by using a one-dimensional scanning module, which helps simplify a structure of the scanning module, reduce complexity of the detection apparatus, and improve scanning efficiency. Specifically, the scanning module is configured to change a scanning angle of the scanning module, to change a propagation direction of a second light beam in a light beam from the transmitting module to the detection region, so as to implement scanning of the detection region. It should be noted that the scanning module may rotate in a continuous operation mode, or may rotate in a step-by-step operation mode. This is not limited in this application. In an actual application, a specific rotation mode may be preset.

In a possible implementation, the scanning module may be located at a waist of a light beam transmitted by the transmitting module, thereby helping reduce a volume of the detection apparatus.

For example, the scanning module may be, for example, one of a polyhedron (for example, an octahedron, a hexahedron, or a tetrahedron) rotating mirror, a micro electro-mechanical system (micro electro-mechanical system, MEMS) vibrating mirror, or an oscillating mirror. It should be noted that a type of the scanning module is not limited in this application, and any structure that can reflect a light beam from the transmitting module to the detection region may be used.

It should be noted that the detection apparatus in this application may further include another possible module, for example, a control module and/or a view window (refer to FIG. 20). A control apparatus is configured to control the detection apparatus to detect the detection region. Alternatively, the control module is further configured to plan a driving route based on determined association information of a target, for example, evading an obstacle on a path on which a vehicle is to travel, or implementing automatic driving of the vehicle. The view window is used to isolate impact of an external environment on a detection system.

For example, the control module may include one or more processing units. The processing unit may be a circuit having a signal (or data) processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration file to implement hardware circuit configuration may be understood as a process in which the processor loads instructions to implement functions of some or all of the foregoing units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). For example, the processor may be an application processor (application processor, AP), an image signal processor (image signal processor, ISP), another programmable logic device, a transistor logic device, a hardware component, or any combination thereof. Different processing units may be independent devices, or may be integrated into one or more processors. For example, the detection apparatus may be, for example, a lidar.

Based on the foregoing described structure and function principles of the detection apparatus, this application may further provide a terminal device. The terminal device may include the detection apparatus in any one of the foregoing embodiments. For example, the terminal device may be, for example, a vehicle (for example, a driverless vehicle, an intelligent vehicle, an electric vehicle, or a digital vehicle), a robot, a surveying and mapping device, an uncrewed aerial vehicle, an intelligent home device (for example, a television, a robot vacuum cleaner, an intelligent desk lamp, an acoustic system, an intelligent lighting system, an electrical appliance control system, home background music, a home theater system, an intercom system, or video surveillance), an intelligent manufacturing device (for example, an industrial device), intelligent transportation equipment (for example, an AGV, an uncrewed transport vehicle, or a truck), or an intelligent terminal (for example, a mobile phone, a computer, a tablet computer, a palmtop computer, a desktop computer, a headset, an acoustic device, a wearable device, an in-vehicle device, a virtual reality device, or an augmented reality device).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "uniformity" does not mean absolute uniformity, and an engineering error can be allowed. "Vertical" does not mean absolute verticality, and an engineering error can be allowed. "At least one" means one or more, and "a plurality of" means two or more. In addition, "and/or" describes an association between associated objects, and represents that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In text descriptions of this application, the character "/" generally represents an "or" relationship between associated objects. In a formula of this application, the character "/" represents a "division" relationship between associated objects. In addition, the word "for example" in this application is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that, in this application, various numeric numbers are distinguished merely for ease of description and are not used to limit the scope of the embodiments of this application. The sequence numbers of the foregoing processes do not mean execution sequences, and the execution sequences of the processes should be determined based on functions and internal logic of the processes. The terms "first", "second", and another similar expression are intended to distinguish between similar objects but do not necessarily describe a specific order or sequence. In addition, the terms "include", "have", and any variant thereof are intended to cover non-exclusive inclusion. A method, system, product, or device that includes a series of steps or units is not necessarily limited to those steps or units expressly listed, but may include other steps or units not expressly listed or inherent to such a process, method, system, product, or device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A transmitting module, comprising a light source assembly and M light splitters, wherein M is an integer greater than 1;

   the light source assembly is configured to transmit a first light beam;
   a first light splitter in the M light splitters is configured to split the first light beam into $N_1$ second light beams, wherein a field of view range of the $N_1$ second light beams is $[0, \alpha]$, and $N_1$ is an integer greater than 2; and
   a second light splitter in the M light splitters is configured to split a target second light beam in the $N_1$ second light beams into $N_2$ third light beams, wherein the target second light beam is a second light beam in a field of view range $[0, \beta_1]$, or a second light beam in a field of view range $[\beta_2, \alpha]$, wherein $\beta_2$ is less than $\alpha$, and $\beta_1$ is greater than 0 and less than $\beta_2$.

2. The module according to claim 1, wherein an intensity of the second light beam is higher than an intensity of the third light beam; and/or
   an angle spacing between any two adjacent second light beams in the $N_1$ second light beams is less than an angle spacing between any two adjacent third light beams in the $N_2$ third light beams.

3. The module according to claim 1 or 2, wherein a second light beam other than the target second light beam in the $N_1$ second light beams corresponds to a region of interest, and the $N_2$ third light beams correspond to a non-region of interest.

4. The module according to claim 3, wherein the region of interest comprises a region corresponding to a central field of view of the transmitting module, and the non-region of interest comprises a region corresponding to an edge field of view of the transmitting module.

5. The module according to any one of claims 1 to 4, wherein the transmitting module further comprises M-1 first deflecting prisms, and one second light splitter corresponds to one first deflecting prism; and
   the first deflecting prism is configured to: deflect the target second light beam by a first angle and then propagate the target second light beam to the second light splitter.

6. The module according to claim 5, wherein an angle spacing between a second light beam and a third light beam that are adjacent and that are on two sides of $\beta_1$ satisfies Formula 1:

$$\Delta\theta_1 - \theta_2(N_2 - 1)/2 \text{ Formula 1,}$$

   wherein
   $\Delta\theta_1$ is the first angle, and $\theta_2$ is an angle spacing of the $N_2$ third light beams.

7. The module according to any one of claims 1 to 6, wherein the intensity of the second light beam is $P/N_1$, the intensity of the third light beam is $P/(N_1 \times N_2)$, and P is an intensity of the first light beam.

8. The module according to any one of claims 1 to 7, wherein the light splitter comprises a diffractive optical element DOE.

9. The module according to any one of claims 1 to 8, wherein the M light splitters further comprise a third light splitter; and
   the third light splitter is configured to split a target third light beam in the $N_2$ third light beams into $N_3$ fourth light beams, wherein a field of view range of the $N_2$ third light beams is $[0, \gamma]$, the target third light beam is a third light beam in a field of view range $[0, \beta_3]$, or a third light beam in a field of view range $[\beta_4, \alpha]$, wherein $\beta_3$ is greater than 0 and less than $\beta_4$, and $\beta_4$ is less than $\gamma$; and the third light splitter is at least one light splitter after the second light splitter.

10. The module according to any one of claims 1 to 9, wherein the light source assembly comprises a spot light source.

11. A transmitting module, comprising a light source assembly, an optical fiber light splitting assembly, and an optical fiber splice array, wherein the optical fiber light splitting assembly is connected to the optical fiber splice array through an optical fiber, and the optical fiber light splitting assembly comprises at least two stages of cascaded optical fiber light splitters;

the light source assembly is configured to transmit a first light beam; and
the optical fiber light splitting assembly is configured to: split the first light beam into Q fourth light beams, and emit the Q fourth light beams by using the optical fiber splice array, wherein Q is an integer greater than 2, and an intensity of a fourth light beam emitted by a first optical fiber splice is different from an intensity of a fourth light beam emitted by a second optical fiber splice in the optical fiber splice array.

12. The module according to claim 11, wherein optical fiber splices in the optical fiber splice array are not evenly distributed or are evenly distributed.

13. The module according to claim 11 or 12, wherein the optical fiber splice array comprises a first optical fiber splice array and a second optical fiber splice array, the first optical fiber splice belongs to the first optical fiber splice array, and the second optical fiber splice belongs to the second optical fiber splice array; and
the intensity of the fourth light beam emitted by the first optical fiber splice is higher than the intensity of the fourth light beam emitted by the second optical fiber splice; and/or a first spacing between optical fiber splices in the first optical fiber splice array is less than a second spacing between optical fiber splices in the second optical fiber splice array.

14. The module according to claim 13, wherein the optical fiber light splitting assembly comprises a first optical fiber light splitting region and a second optical fiber light splitting region, an optical fiber light splitter in the first optical fiber light splitting region is connected to the first optical fiber splice in the first optical fiber splice array, and an optical fiber light splitter in the second optical fiber light splitting region is connected to the second optical fiber splice in the second optical fiber splice array; and
a quantity of stages of cascaded optical fiber light splitters in the first optical fiber light splitting region is less than a quantity of stages of cascaded optical fiber light splitters in the second optical fiber light splitting region.

15. The module according to any one of claims 11 to 14, wherein the fourth light beam emitted by the first optical fiber splice corresponds to a region of interest, and the fourth light beam emitted by the second optical fiber splice corresponds to a non-region of interest.

16. The module according to claim 15, wherein the region of interest comprises a region corresponding to a central field of view of the transmitting module, and the non-region of interest comprises a region corresponding to an edge field of view of the transmitting module.

17. The module according to any one of claims 13 to 16, wherein the transmitting module further comprises a first lens assembly;

the first spacing satisfies Formula 2:

$$\varphi_1 = D_1/f_1 \text{ Formula 2,}$$

wherein
$f_1$ is an equivalent focal length of the first lens assembly, $D_1$ is the first spacing, and $\varphi_1$ is an angle spacing of fourth light beams emitted by the first optical fiber splice array; and
the second spacing satisfies Formula 3:

$$\varphi_2 = D_2/f_1 \text{ Formula 3,}$$

wherein
$f_1$ is the equivalent focal length of the first lens assembly, $D_2$ is the second spacing, and $\varphi_2$ is an angle spacing of fourth light beams emitted by the second optical fiber splice array.

18. The module according to any one of claims 11 to 17, wherein the optical fiber light splitter is a light splitter that evenly splits light.

19. The module according to any one of claims 11 to 18, wherein the light source assembly comprises a spot light source.

20. A transmitting module, comprising a light source array and a second lens assembly, wherein light sources in the light source array are not evenly distributed,

> the light source array is configured to transmit K fifth light beams, wherein K is an integer greater than 2; and
> the second lens assembly is configured to propagate the K fifth light beams from the light source array to a detection region.

21. The module according to claim 20, wherein the light source array comprises a first light source array and a second light source array, and a third spacing between light sources in the first light source array is different from a fourth spacing between light sources in the second light source array.

22. The module according to claim 21, wherein the first light source array comprises a light source that is in the light source array and that corresponds to a region of interest, and the second light source array comprises a light source that is in the light source array and that corresponds to a non-region of interest; and
the third spacing is less than the fourth spacing.

23. The module according to claim 21 or 22, wherein an intensity of a current injected into the light source in the first light source array is higher than an intensity of a current injected into the light source in the second light source array.

24. The module according to claim 22 or 23, wherein the region of interest comprises a region corresponding to a central field of view of the transmitting module, and the non-region of interest comprises a region corresponding to an edge field of view of the transmitting module.

25. The module according to any one of claims 21 to 24, wherein the third spacing satisfies Formula 4:

$$\omega_1 = D_3/f_2 \text{ Formula 4,}$$

wherein

$f_2$ is an equivalent focal length of the second lens assembly, $D_3$ is the third spacing, and $\omega_1$ is an angle spacing of fifth light beams transmitted by the light sources in the first light source array; and
the fourth spacing satisfies Formula 5:

$$\omega_2 = D_4/f_2 \text{ Formula 5,}$$

wherein
$f_2$ is the equivalent focal length of the second lens assembly, $D_4$ is the fourth spacing, and $\omega_2$ is an angle spacing of fifth light beams transmitted by the light sources in the second light source array.

26. The module according to any one of claims 20 to 25, wherein the light source array comprises a one-dimensional light source array or a two-dimensional light source array.

27. A receiving module, comprising a detector array and a third lens assembly, wherein detectors in the detector array are not evenly distributed;

> the third lens assembly is configured to propagate L sixth light beams from a detection region to the detector array, wherein L is an integer greater than 2; and
> the detector array is configured to convert the L sixth light beams into electrical signals, wherein the electrical signals are used to determine information about the detection region.

28. The module according to claim 27, wherein the detector array comprises a first detector array and a second detector array, and a fifth spacing between detectors in the first detector array is different from a sixth spacing between detectors in the second detector array.

29. The module according to claim 27, wherein the first detector array comprises a detector corresponding to a region of interest, and the second detector array comprises a detector corresponding to a non-region of interest, and the fifth spacing is less than the sixth spacing.

30. The module according to claim 28 or 29, wherein the fifth spacing satisfies Formula 6:

$$\Omega_1 = D_5/f_3 \text{ Formula } 6,$$

wherein

$f_3$ is an equivalent focal length of the third lens assembly, $D_5$ is the fifth spacing, and $\Omega_1$ is an angle spacing of sixth light beams received by the detectors in the first detector array; and
the sixth spacing satisfies Formula 7:

$$\Omega_2 = D_6/f_3 \text{ Formula } 7,$$

wherein
$f_3$ is the equivalent focal length of the third lens assembly, $D_6$ is the sixth spacing, and $\Omega_2$ is an angle spacing of sixth light beams received by the detectors in the second detector array.

31. A receiving module, comprising an optical fiber splice array and a detector array, wherein the optical fiber splice array is connected to the detector array through an optical fiber, and optical fiber splices in the optical fiber splice array are not evenly distributed;

the optical fiber splice array is configured to propagate H seventh light beams from a detection region to the detector array, wherein H is an integer greater than 2; and
the detector array is configured to convert the H seventh light beams into electrical signals, wherein the electrical signals are used to determine information about the detection region.

32. The module according to claim 31, wherein the optical fiber splice array comprises a third optical fiber splice array and a fourth optical fiber splice array, and a seventh spacing between optical fiber splices in the third optical fiber splice array is different from an eighth spacing between optical fiber splices in the fourth optical fiber splice array.

33. The module according to claim 32, wherein the third optical fiber splice array corresponds to a region of interest, and the fourth optical fiber splice array corresponds to a non-region of interest; and
the seventh spacing is less than the eighth spacing.

34. The module according to claim 32 or 33, wherein the receiving module further comprises a fourth lens assembly;

the seventh spacing satisfies Formula 8:

$$\eta_1 = D_7/f_4 \text{ Formula } 8,$$

wherein
$f_4$ is an equivalent focal length of the fourth lens assembly, $D_7$ is the seventh spacing, and $\eta_1$ is an angle spacing of seventh light beams received by the third optical fiber splice array; and
the eighth spacing satisfies Formula 9:

$$\eta_2 = D_8/f_4 \text{ Formula } 9,$$

wherein
$f_4$ is the equivalent focal length of the fourth lens assembly, $D_8$ is the eighth spacing, and $\eta_2$ is an angle spacing of seventh light beams received by the fourth optical fiber splice array.

35. The module according to any one of claims 31 to 34, wherein the detectors in the detector array are not evenly distributed or are evenly distributed.

36. A detection apparatus, comprising: the transmitting module according to any one of claims 1 to 10 and the receiving module according to any one of claims 27 to 30; or

   the transmitting module according to any one of claims 1 to 10 and the receiving module according to any one of claims 31 to 35; or
   the transmitting module according to any one of claims 11 to 19 and the receiving module according to any one of claims 27 to 30; or
   the transmitting module according to any one of claims 11 to 19 and the receiving module according to any one of claims 31 to 35; or
   the transmitting module according to any one of claims 20 to 26 and the receiving module according to any one of claims 27 to 30; or
   the transmitting module according to any one of claims 20 to 26 and the receiving module according to any one of claims 31 to 35.

37. The apparatus according to claim 36, wherein the detection apparatus further comprises a scanning module; and the scanning module is configured to: propagate a second light beam and a third light beam that are from the transmitting module, or a fourth light beam or a fifth light beam that is from the transmitting module to a detection region, and propagate a sixth light beam or a seventh light beam that is from the detection region to the receiving module.

38. A terminal device, comprising a control apparatus and the detection apparatus according to claim 36 or 37, wherein the control apparatus is configured to control the detection apparatus to detect a detection region.

Detection apparatus

Detection apparatus

Detection apparatus

FIG. 1

FIG. 2

FIG. 3a

FIG. 3b

Light spot of a
third light beam

Light spot of a
second light beam

Light spot of a
third light beam

FIG. 4a

Light spot of a
third light beam

Light spot of a
second light beam

FIG. 4b

FIG. 5

EP 4 571 361 A1

FIG. 6a

FIG. 6b

Transmitting module

Optical fiber light splitting assembly

Light source assembly

First light beam

Optical fiber light splitter

Optical fiber light splitter

...

Optical fiber light splitter

Optical fiber light splitter

Fourth light beam

Optical fiber splice array

FIG. 7

Second optical fiber splice array

Second spacing

First optical fiber splice array

First spacing

FIG. 8a

Second spacing

Second optical
fiber splice array

First optical fiber
splice array

First spacing

FIG. 8b

Light spot of a fourth light beam
corresponding to a non-region of interest

Light spot of a fourth light beam
corresponding to a region of interest

Light spot of a fourth light beam
corresponding to a non-region of interest

FIG. 9a

FIG. 9b

FIG. 10a

Light spot of a fourth light beam
emitted by a second optical fiber splice

Light spot of a fourth light beam
emitted by a first optical fiber splice

FIG. 10b

| Transmitting module | | |
| Light source array | Fifth light beam → | Second lens assembly |

FIG. 11

Light source light source

Third spacing

First light
source array

Fourth spacing

Second light
source array

FIG. 12a

Two-dimensional light source array

First light
source array

Third spacing

Second light
source array

Fourth spacing

FIG. 12b

FIG. 13

Receiving module

Detector array ← Sixth light beam ← Third lens assembly ← Sixth light beam

FIG. 14

Detector array

Sixth spacing

Second detector array

First detector array

Fifth spacing

FIG. 15

FIG. 16

FIG. 17

Detector array

FIG. 18

Fourth optical
fiber splice array

Eighth spacing

Third optical
fiber splice array

Seventh spacing

FIG. 19a

Eighth spacing

Fourth optical
fiber splice array

Third optical
fiber splice array

Seventh spacing

FIG. 19b

Detection apparatus

View window

Transmitting
module

Scanning
module

Receiving
module

FIG. 20

# EP 4 571 361 A1

## INTERNATIONAL SEARCH REPORT

| International application No. |
| --- |
| **PCT/CN2022/113441** |

### A. CLASSIFICATION OF SUBJECT MATTER

G01S17/02(2020.01)i;G01S7/481(2006.01)i

According to International Patent Classification (IPC) or to both national classification and IPC

### B. FIELDS SEARCHED

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

VEN, CNTXT, EPTXT, CNKI: 激光, 雷达, 分光, 分束, 扩束, 非均匀, 光纤, 光纤头, 探测, 阵列, 级联, 强度, 光强, 密, 疏, 透镜, laser, radar, splitting, light, non, uniform, detection, optical, fiber, head, array, power, distribution, lens

### C. DOCUMENTS CONSIDERED TO BE RELEVANT

| Category* | Citation of document, with indication, where appropriate, of the relevant passages | Relevant to claim No. |
| --- | --- | --- |
| X | CN 113219438 A (SUZHOU YIJING TECHNOLOGY CO., LTD.) 06 August 2021 (2021-08-06)<br>description, paragraphs 49-89, and figures 2 and 8 | 1-10, 36-38 |
| X | CN 113552580 A (SHANGHAI HESAI TECHNOLOGY CO., LTD.) 26 October 2021 (2021-10-26)<br>description, paragraphs 47-53 | 20-30, 36-38 |
| X | CN 114152933 A (SHANGHAI HESAI TECHNOLOGY CO., LTD.) 08 March 2022 (2022-03-08)<br>description, paragraphs 71-79, 86, 135-137, and 147-149 | 20-30, 36-38 |
| X | CN 113567956 A (HUAWEI TECHNOLOGIES CO., LTD.) 29 October 2021 (2021-10-29)<br>description, paragraphs 83-105 | 20-26 |
| A | CN 108710137 A (SHANGHAI INSTITUTE OF OPTICS AND FINE MECHANICS, CHINESE ACADEMY OF SCIENCES) 26 October 2018 (2018-10-26)<br>description, paragraphs 17-20, and figure 1 | 11-19, 31-35 |
| A | US 2019033429 A1 (OPSYS TECHNOLOGY LTD.) 31 January 2019 (2019-01-31)<br>entire document | 1-38 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 April 2023** | **20 April 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/113441** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 215526114 U (ZVISION TECHNOLOGIES CO., LTD.) 14 January 2022 (2022-01-14) entire document | 1-38 |

Form PCT/ISA/210 (second sheet) (July 2022)

## INTERNATIONAL SEARCH REPORT
### Information on patent family members

International application No.

**PCT/CN2022/113441**

| Patent document cited in search report | | | Publication date (day/month/year) | Patent family member(s) | | | Publication date (day/month/year) |
|---|---|---|---|---|---|---|---|
| CN | 113219438 | A | 06 August 2021 | None | | | |
| CN | 113552580 | A | 26 October 2021 | WO | 2021197170 | A1 | 07 October 2021 |
| | | | | CN | 113552578 | A | 26 October 2021 |
| CN | 114152933 | A | 08 March 2022 | CN | 216646804 | U | 31 May 2022 |
| CN | 113567956 | A | 29 October 2021 | WO | 2022213814 | A1 | 13 October 2022 |
| CN | 108710137 | A | 26 October 2018 | None | | | |
| US | 2019033429 | A1 | 31 January 2019 | KR | 20200021558 | A | 28 February 2020 |
| | | | | US | 2020081101 | A1 | 12 March 2020 |
| | | | | JP | 2022022361 | A | 03 February 2022 |
| | | | | WO | 2019022941 | A1 | 31 January 2019 |
| | | | | US | 2021181311 | A1 | 17 June 2021 |
| | | | | KR | 20210137586 | A | 17 November 2021 |
| | | | | EP | 3658949 | A1 | 03 June 2020 |
| | | | | JP | 2020527724 | A | 10 September 2020 |
| | | | | KR | 20210021409 | A | 25 February 2021 |
| | | | | KR | 20220119769 | A | 30 August 2022 |
| | | | | JP | 2021105613 | A | 26 July 2021 |
| | | | | CN | 110914702 | A | 24 March 2020 |
| | | | | CN | 115015883 | A | 06 September 2022 |
| CN | 215526114 | U | 14 January 2022 | None | | | |

Form PCT/ISA/210 (patent family annex) (July 2022)